# EUROPEAN PATENT APPLICATION

(11) **EP 4 497 764 A1**
(43) Date of publication of application: **29.01.2025**
(21) Application number: 23774823.1
(22) Date of filing: 17.03.2023
(51) Int. Cl.: C08F 214/18, C09D 5/00, C09D 127/12

(54) **FLUOROPOLYMER, AQUEOUS SOLUTION, COATING COMPOSITION, FLUOROPOLYMER MANUFACTURING METHOD**

(30) Priority: 23.03.2022 JP 2022046988
(71) Applicant: DAIKIN INDUSTRIES, LTD., Osaka-shi, Osaka 530-0001 (JP)
(72) Inventor: HIGASHI, Masahiro, Osaka-Shi, Osaka 530-0001 (JP); NAKANISHI, Kanako, Osaka-Shi, Osaka 530-0001 (JP); ISHIHARA, Sumi, Osaka-Shi, Osaka 530-0001 (JP); HAMADA, Tomohito, Osaka-Shi, Osaka 530-0001 (JP); YAMATO, Kensuke, Osaka-Shi, Osaka 530-0001 (JP); KANEKO, Kazuki, Osaka-Shi, Osaka 530-0001 (JP); KISHIKAWA, Yosuke, Osaka-Shi, Osaka 530-0001 (JP)
(74) Representative: Hoffmann Eitle
(86) International application number: PCT/JP2023/010693
(87) International publication number: WO 2023/182228

(57) **Abstract**

Provided is a fluoropolymer containing a polymerization unit (I) derived from a monomer (I) represented by the general formula (I) and a polymerization unit (II) derived from a monomer (II) represented by the formula (II):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more; and

CHF=CHF (II)

## Description

### TECHNICAL FIELD

The present disclosure relates to a fluoropolymer, an aqueous solution, a coating composition, and a method for producing a fluoropolymer.

### BACKGROUND ART

Patent Document 1 discloses a composition containing water and a water-soluble polymer in which the proportion of carbon atom-bonded hydrogen atoms replaced with fluorine atoms is 50% or more, wherein the content of a compound having a molecular weight of 700 or more and 3,000 or less is 3.5% or less based on the water-soluble polymer.

### RELATED ART

### PATENT DOCUMENT

Patent Document 1: International Publication No. WO 2020/218619

### SUMMARY OF THE INVENTION

### PROBLEM TO BE SOLVED BY THE INVENTION

An object of the present disclosure is to provide a fluoropolymer that has a high decomposition initiation temperature, is promptly decomposed at a temperature equal to or higher than the decomposition initiation temperature, and has excellent water solubility.

### MEANS FOR SOLVING THE PROBLEM

The present disclosure provides a fluoropolymer comprising a polymerization unit (I) derived from a monomer (I) represented by the general formula (I) and a polymerization unit (II) derived from a monomer (II) represented by the formula (II):

CX¹X³=CX²R (-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more; and

CHF=CHF (II)

In the fluoropolymer of the present disclosure, preferably the content of the polymerization unit (I) is 20 to 99 mol% based on the entirety of polymerization units constituting the fluoropolymer, and the content of the polymerization unit (II) is 80 to 1 mol% based on the entirety of polymerization units constituting the fluoropolymer.

In the fluoropolymer of the present disclosure, more preferably the content of the polymerization unit (I) is 40 to 99 mol% based on the entirety of polymerization units constituting the fluoropolymer, and the content of the polymerization unit (II) is 60 to 1 mol% based on the entirety of polymerization units constituting the fluoropolymer.

In the fluoropolymer of the present disclosure, the content of a dimer and a trimer of the monomer (I) is preferably 1.0% by mass or less based on the fluoropolymer.

In the fluoropolymer of the present disclosure, the content of a dimer and a trimer composed of the monomer (I) and the monomer (II) is preferably 1.0% by mass or less based on the fluoropolymer.

In the fluoropolymer of the present disclosure, A⁰ is preferably -SO₃M or -COOM, wherein M is H, a metal atom, NR⁷₄, imidazolium optionally having a substituent, pyridinium optionally having a substituent, or phosphonium optionally having a substituent, and R⁷ is H or an organic group.

In the fluoropolymer of the present disclosure, the polymerization unit (I) is preferably at least one selected from the group consisting of a polymerization unit (1) derived from a monomer (1) represented by the general formula (1) and a polymerization unit (2) derived from a monomer (2) represented by the general formula (2):

CX₂=CY(-CZ₂-O-Rf-A) (1)

wherein X is the same or different and is H or F; Y is H, F, an alkyl group, or a fluorine-containing alkyl group; Z is the same or different and is H, F, an alkyl group, or a fluoroalkyl group; Rf is a fluorine-containing alkylene group having 1 to 40 carbon atoms or a fluorine-containing alkylene group having 2 to 100 carbon atoms and having ether bond; and A is -COOM, -SO₃M, -OSO₃M, or -C(CF₃)₂OM, wherein M is H, a metal atom, NR⁷₄, imidazolium optionally having a substituent, pyridinium optionally having a substituent, or phosphonium optionally having a substituent, and R⁷ is H or an organic group; provided that at least one of X, Y, and Z contains fluorine atom; and

CX₂=CY(-O-Rf-A) (2)

wherein X is the same or different and is H or F; Y is H, F, an alkyl group, or a fluorine-containing alkyl group; Rf is a fluorine-containing alkylene group having 1 to 40 carbon atoms or a fluorine-containing alkylene group having 2 to 100 carbon atoms and having ether bond or keto group; and A is as described above.

In the fluoropolymer of the present disclosure, preferably A is -SO₃M or -COOM, wherein M is H, a metal atom, NR⁷₄, imidazolium optionally having a substituent, pyridinium optionally having a substituent, or phosphonium optionally having a substituent, and R⁷ is H or an organic group.

The fluoropolymer of the present disclosure preferably has a weight average molecular weight (Mw) of 1.0 × 10⁴ or more.

The fluoropolymer of the present disclosure preferably has a molecular weight distribution (Mw/Mn) of 3.0 or less.

The fluoropolymer of the present disclosure preferably has an ion exchange capacity of 0.8 meq/g or more.

The fluoropolymer of the present disclosure preferably has an ion exchange rate (IXR) of 43 or less.

Also, the present disclosure provides an aqueous solution comprising the fluoropolymer.

In the aqueous solution of the present disclosure, the content of the fluoropolymer is preferably 1.0% by mass or more based on the aqueous solution.

Also, the present disclosure provides a coating composition comprising the fluoropolymer or the aqueous solution.

Also, the present disclosure provides a method for producing the fluoropolymer, comprising polymerizing a monomer (I) and a monomer (II) to produce the fluoropolymer.

In the production method of the present disclosure, the temperature of the polymerization is preferably 70°C or lower.

In the production method of the present disclosure, the polymerization is preferably performed in an aqueous medium.

In the production method of the present disclosure, preferably the polymerization is performed in the presence of a polymerization initiator, and the polymerization initiator is a persulfate.

In the production method of the present disclosure, preferably the polymerization is performed in the presence of a polymerization initiator in an aqueous medium, and the total amount of the polymerization initiator added for use in the polymerization is 0.00001 to 10% by mass based on the aqueous medium.

In the production method of the present disclosure, preferably the polymerization is performed in an aqueous medium, a composition containing the aqueous medium and the fluoropolymer is recovered after the polymerization is complete, and the composition is treated by at least one means selected from the group consisting of ultrafiltration, microfiltration, dialysis membrane treatment, liquid separation, and reprecipitation.

### EFFECTS OF INVENTION

The present disclosure is capable of providing a fluoropolymer that has a high decomposition initiation temperature, is promptly decomposed at a temperature equal to or higher than the decomposition initiation temperature, and has excellent water solubility.

### BRIEF DESCRIPTION OF DRAWINGS

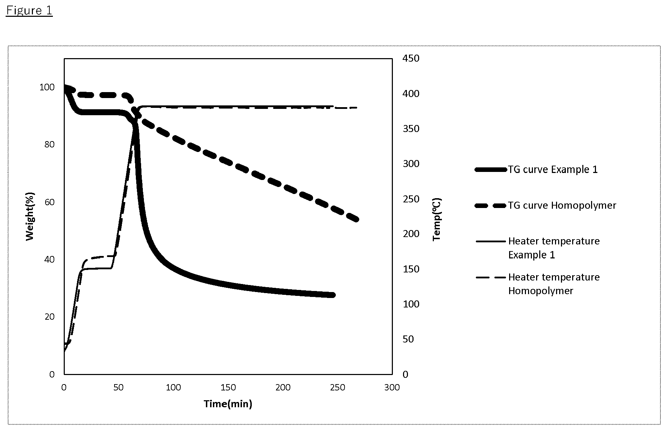

Figure 1 is a graph illustrating a curve representing a change in heater temperature over time in TG-DTA analysis performed in Example 1 and a TG curve obtained in TG-DTA analysis.

### DESCRIPTION OF EMBODIMENTS

Before describing the present disclosure in detail, some terms used in the present disclosure will now be defined or described.

The term "organic group" as used herein means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-,
wherein Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

In the present disclosure, the range represented by endpoints includes all numerical values that fall within that range (for example, 1 to 10 includes 1.4, 1.9, 2.33, 5.75, 9.98, and the like).

In the present disclosure, the description of "at least one" includes all numerical values of 1 or more (for example, at least 2, at least 4, at least 6, at least 8, at least 10, at least 25, at least 50, at least 100, and so on).

Hereinafter, specific embodiments of the present disclosure will now be described in detail, but the present disclosure is not limited to the following embodiments.

### (Fluoropolymer)

The fluoropolymer of the present disclosure contains a polymerization unit (I) and a polymerization unit (II). Containing the polymerization unit (I) and the polymerization unit (II), the fluoropolymer of the present disclosure has the properties of having a high decomposition initiation temperature and, also, being promptly decomposed when being heated to a temperature equal to or higher than the decomposition initiation temperature. Accordingly, a coating film containing the fluoropolymer of the present disclosure can stably coat an article up to a certain temperature, and can be readily removed by being heated to a temperature equal to or higher than the decomposition initiation temperature. Moreover, the fluoropolymer of the present disclosure has high water solubility, and the use of the fluoropolymer of the present disclosure thus facilitates preparation of a highly concentrated aqueous solution for use in coating.

The polymerization unit (I) is a polymerization unit derived from a monomer (I) represented by the general formula (I) :

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

The polymerization unit (II) is a polymerization unit derived from a monomer (II) represented by the formula (II):

CHF=CHF (II)

In the present disclosure, the anionic group includes a functional group that imparts an anionic group, e.g., an acid group such as -COOH and an acid base such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM, wherein M is -H, a metal atom, -NR⁷₄, imidazolium optionally having a substituent, pyridinium optionally having a substituent, or phosphonium optionally having a substituent, and R⁷ is H or an organic group.

In the fluoropolymer of the present disclosure, the monomer (I) represented by the general formula (I) may contain one or more monomers.

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

m is an integer of 1 or more and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen atom other than fluorine, such as chlorine, and the divalent organic group may or may not contain a double bond. R may be linear or branched, and may be cyclic or acyclic. R may also contain a functional group (such as ester, ether, ketone (a keto group), amine, or halide).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all hydrogen atoms bonded to carbon atoms in the hydrocarbon group may be replaced with fluorine.

R is preferably at least one selected from -(CH₂)ₐ-, - (CF₂)ₐ-, -(CF₂)ₐ-O-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)_{c}-O]_{d}-, -O-[CF₂CF(CF₃)O]ₐ-(CF₂)_{b}-, -O-(CF₂)ₐ-O-[CF(CF₃)CF₂O]_{b}-O-, -O-[CF₂CF(CF₃)O]ₐ-(CF₂)_{b}-O-, -O-[CF₂CF(CF₃)O]ₐ-(CF₂)_{b}-O-[CF(CF₃)CF₂O]_{c}-O-, -[CF₂CF(CF₃)O]ₐ-, -[CF(CF₃)CF₂O]ₐ-, -(CF₂)ₐ-O-[CF (CF₃)CF₂O]ₐ-, - (CF₂)ₐ-O-[CF(CF₃)CF₂O]ₐ-(CF₂)_{b}-, -[CF₂CF(CF₃)]ₐ-CO-(CF₂)_{b}-, and a combination thereof.

In the formulae, a, b, c, and d are each independently at least 1 or more. a, b, c and d may be each independently 2 or more, 3 or more, 4 or more, 10 or more, or 20 or more. The upper limits of a, b, c, and d are, for example, 100.

R is preferably a divalent group represented by the general formula (r1):

-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; and g is 0 or 1,
and more preferably a divalent group represented by the general formula (r2):

-CF₂-O-(CX⁷₂)ₑ-(O)_{g}- (r2)

wherein X⁷ is each independently H, F, or CF₃; e is an integer of 0 to 3; and g is 0 or 1.

Specific suitable examples of R include -CF₂-O-, -CF₂-O-CF₂-, -CF₂-O-CH₂-, -CF₂-O-CH₂CF₂-, -O-CF₂-, -O-CF₂CF₂-, -O-CF₂CF₂CF₂-, -O-CF₂CF₂CF₂CF₂-, -O-CF₂CF (CF₃)-O-CF₂-, -O-CF₂CF (CF₃)-O-CF₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CF₂-O-CF₂-, and -CF₂-O-CF(CF₃)CH₂-. In particular, R is preferably a perfluoroalkylene group optionally containing an oxygen atom and, specifically, is preferably -CF₂-O-, -CF₂-O-CF₂-, -O-CF₂-, -O-CF₂CF₂-, -O-CF₂CF (CF₃)-O-CF₂-, -O-CF₂CF (CF₃)-O-CF₂CF₂-, -CF₂-O-CF₂CF₂-, -CF₂-O-CF(CF₃)-, -CF₂-O-CF(CF₃)CF₂-, or - CF₂-O-CF(CF₃)CF₂-O-.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and even more preferably one is F, and the other is CF₃.

Also, -R-CZ¹Z²- in the general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and even more preferably one is F, and the other is CF₃.

-R-CZ¹Z²- in the general formula (I) is preferably -CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF (CF₃)-, -CF₂-O-CF(CF₃)-C (CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF(CF₃)-, -CF₂-O-CF₂-CF(CF₃)-, -CF₂-O-CF₂CF₂-CF(CF₃)-, -CF₂-O-CF(CF₃)-CF (CF₃)-, -CF₂-O-CF(CF₃)CF₂-CF(CF₃)-, or -CF₂-O-CF(CF₃)CF₂-O-CF(CF₃)-, and even more preferably -O-CF₂CF₂- and -O-CF₂CF (CF₃)-O-CF₂CF₂-.

The anionic group (A⁰) may be -SO₂M, -SO₃M, -OSO₃M, -COOM, -SO₂NR'CH₂COOM, -CH₂OP(O)(OM) ₂, [-CH₂O]₂P(O)(OM), - CH₂CH₂OP(O)(OM) ₂, [-CH₂CH₂O]₂P(O)(OM), -CH₂CH₂OSO₃M, -P(O)(OM) ₂, - SO₂NR'CH₂CH₂OP(O)(OM) ₂, [-SO₂NR'CH₂CH₂O]₂P(O)(OM), -CH₂OSO₃M, - SO₂NR'CH₂CH₂OSO₃M, or -C(CF₃)₂OM. In particular, -SO₃M, -OSO₃M, -COOM, -P(O)(OM)₂, or -C(CF₃)₂OM is preferable, -COOM, -SO₃M, - OSO₃M, -P(O)(OM)₂, or -C(CF₃)₂OM is more preferable, -SO₃M, - COOM, or -P(O)(OM)₂ is even more preferable, and -SO₃M or -COOM is particularly preferable.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), and preferable is Na, K, or Li.

M is preferably -H, a metal atom, or NR⁷₄, more preferably -H, an alkali metal (Group 1), an alkaline earth metal (Group 2), or NR⁷₄, even more preferably -H, -Na, -K, -Li, or NH₄, yet more preferably -H, -Na, -K, or NH₄, and particularly preferably -H, -Na, or NH₄.

In the fluoropolymer, each polymerization unit (I) may have a different anionic group or may have the same anionic group.

The monomer (I) is also preferably a monomer represented by the general formula (Ia).

The fluoropolymer is also preferably a polymer containing a polymerization unit (Ia) derived from a monomer represented by the general formula (Ia):

CF₂=CF-O-Rf⁰-A⁰ (Ia)

wherein A⁰ is an anionic group; and Rf⁰ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The fluoropolymer is also preferably a polymer containing a polymerization unit (Ib) derived from a monomer represented by the general formula (Ib):

CH₂=CH-O-Rf⁰-A⁰ (Ib)

wherein A⁰ is an anionic group, and Rf⁰ is a perfluorinated divalent linking group as defined by the formula (Ia).

In a preferable embodiment, A⁰ in the general formula (I) is a sulfate group. A⁰ is, for example, -CH₂OSO₃M, - CH₂CH₂OSO₃M, or -SO₂NR'CH₂CH₂OSO₃M, wherein R' is H or an alkyl group having 1 to 4 carbon atoms, and M is as described above.

When A⁰ is a sulfate group, examples of the monomer represented by the general formula (I) include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH(O(CF₂)₄CH2OSO₃M), CF₂=CF(OCF₂CF₂SO₂N(CH₃)CH₂CH₂OSO₃M), CH₂=CH(OCF₂CF₂CH₂OSO₃M), CF₂=CF(OCF₂CF₂CF₂CF₂SO₂N(CH₃)CH₂CH₂OSO₃M), CH₂=CH(OCF₂CF₂CF₂CH₂OSO₃M). In the formulae, M is as described above.

In a preferable embodiment, A⁰ in the general formula (I) is a sulfonate group. A⁰ is, for example, -SO₃M, wherein M is as described above.

When A⁰ is a sulfonate group, examples of the monomer represented by the general formula (I) include CF₂=CF(OCF₂CF₂SO₃M), CF₂=CF(O(CF₂)₃SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(OCF₂CF₂SO₃M), CF₂=CF(OCF₂CF(CF₃)OCF₂CF₂CF₂CF₂SO₃M), CH₂=CH(O(CF₂)₄SO₃M), and CH₂=CH(O(CF₂)₃SO₃M). In the formulae, M is as described above.

In a preferable embodiment, A⁰ in the general formula (I) is a carboxylate group. A⁰ is, for example, COOM or SO₂NR'CH₂COOM, wherein R' is H or an alkyl group having 1 to 4 carbon atoms, and M is as described above. When A⁰ is a carboxylate group, examples of the monomer represented by the general formula (I) include CF₂=CF(OCF₂CF₂COOM), CF₂=CF(O(CF₂)₃COOM), CF₂=CF(O(CF₂)₄COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(OCF₂CF₂COOM), CH₂=CH(O(CF₂)₄COOM), CH₂=CH(O(CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(OCF₂CF₂SO₂NR'CH₂COOM), CF₂=CF(OCF₂CF(CF₃)OCF₂CF₂CF₂CF₂SO₂NR'CH₂COOM), CH₂=CH(O(CF₂)₄SO₂NR'CH₂COOM), and CH₂=CH(O(CF₂)₃SO₂NR'CH₂COOM). In the formulae, R' is H or an alkyl group having 1 to 4 carbon atoms, and M is as described above.

In a preferable embodiment, A⁰ in the general formula (I) is a phosphate group. A⁰ is, for example, -CH₂OP(O)(OM)₂, [-CH₂O]₂P(O)(OM), -CH₂CH₂OP(O)(OM)₂, [-CH₂CH₂O]₂P(O)(OM), [-SO₂NR'CH₂CH₂O]₂P(O)(OM), or SO₂NR'CH₂CH₂OP(O)(OM) ₂, wherein R' is an alkyl group having 1 to 4 carbon atoms, and M is as described above.

When A⁰ is a phosphate group, examples of the monomer represented by the general formula (I) include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(OCF₂CF₂CH₂OP(O)(OM)₂), CH₂=CH(O(CF₂)₄CH₂OP(O)(OM)₂), and CH₂=CH(O(CF₂)₃CH₂OP(O)(OM) ₂). In the formulae, M is as described above.

In a preferable embodiment, A⁰ in the general formula (I) is a phosphonate group. When A⁰ is a phosphonate group, examples of the monomer represented by the general formula (I) include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(OCF₂CF₂P(O)(OM)₂), CH₂=CH(O(CF₂)₄P(O)(OM)₂), and CH₂=CH(O(CF₂)₃P(O)(OM)₂), wherein M is as described above.

The monomer (I) is preferably a monomer (1) represented by the general formula (1).

The fluoropolymer is preferably a fluoropolymer (1) containing, as the polymerization unit (I), a polymerization unit (1) derived from a monomer (1) represented by the general formula (1):

CX₂=CY(-CZ₂-O-Rf-A) (1)

wherein X is the same or different and is H or F; Y is H, F, an alkyl group, or a fluorine-containing alkyl group; Z is the same or different and is H, F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM, wherein M is H, a metal atom, NR⁷₄, imidazolium optionally having a substituent, pyridinium optionally having a substituent, or phosphonium optionally having a substituent, and R⁷ is H or an organic group; provided that at least one of X, Y, and Z contains a fluorine atom.

The fluorine-containing alkylene group having 2 to 100 carbon atoms and an ether bond is an alkylene group that does not include a structure having a terminal oxygen atom and that contains an ether bond between carbon atoms.

In the general formula (1), each X is H or F. X may be both F, or at least one may be H. For example, one may be F and the other may be H, or both may be H.

In the general formula (1), Y is H, F, an alkyl group, or a fluorine-containing alkyl group. The alkyl group is an alkyl group that does not contain a fluorine atom and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Y is preferably H, F, or CF₃, and more preferably F.

In the general formula (1), Z is the same or different and is H, F, an alkyl group, or a fluoroalkyl group. The alkyl group is an alkyl group that does not contain a fluorine atom and has one or more carbon atoms. The alkyl group preferably has 6 or less carbon atoms, more preferably 4 or fewer carbon atoms, and even more preferably 3 or fewer carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Z is preferably H, F, or CF₃, and more preferably F.

In the general formula (1), at least one of X, Y, and Z contains a fluorine atom. For example, X may be H, and Y and Z may be F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. Further, the fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include -CF₂-, -CH₂CF₂-, -CF₂CF₂-, -CF₂CH₂-, -CF₂CF₂CF₂-, -CF₂CF₂CH₂-, -CF (CF₃)-, - CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by, for example, the general formula: 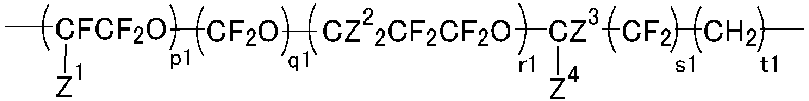 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF(CF₃)CF₂-O-CF(CF₃)-, - (CF (CF₃)CF₂-O) ₙ-CF (CF₃)- (wherein n is an integer of 1 to 10), -CF (CF₃)CF₂-O-CF(CF₃)CH₂-, - (CF (CF₃)CF₂-O) ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (1), A is -COOM, -SO₃M, -OSO₃M, or -C(CF₃)₂OM, wherein M is H, a metal atom, -NR⁷₄, imidazolium optionally having a substituent, pyridinium optionally having a substituent, or phosphonium optionally having a substituent, and R⁷ is H or an organic group.

R⁷ is preferably H or a C₂₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and preferable is Na, K, or Li.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, and particularly preferably H, Na, or NH₄.

A is preferably -COOM or -SO₃M.

Examples of the monomer represented by the general formula (1) include monomers represented by the general formula (1a):

CX₂=CFCF₂-O-(CF(CF₃)CF₂O) ₙ₅-CF(CF₃)-A (1a)

wherein each X is the same and represents F or H; n5 represents an integer of 0 or 1 to 10; and A is as defined above.

In the general formula (1a), n5 is preferably 0 or an integer of 1 to 5, more preferably 0, 1, or 2, and even more preferably 0 or 1 from the viewpoint of obtaining particles having a small primary particle size.

The monomer (1) is preferably a monomer represented by the general formula (1A).

The polymerization unit (1) is preferably a polymerization unit (1A) derived from a monomer represented by the general formula (1A):

CH₂=CF(-CF₂-O-Rf-A) (1A)

wherein Rf and A are as described above.

Specific examples of the monomer represented by the formula (1A) include monomers represented by the general formula: 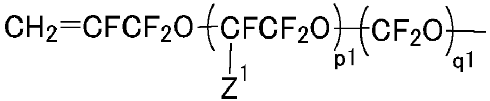 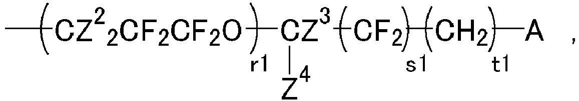
wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include:

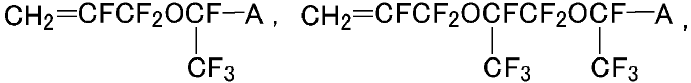

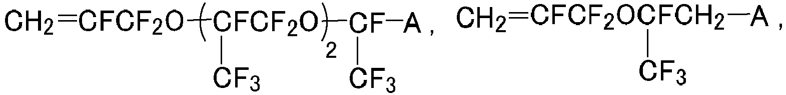

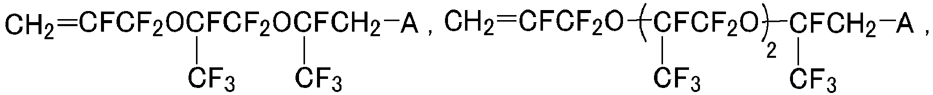

   CH₂=CFCF₂OCH₂CF₂-A, CH₂=CFCF₂O(CH₂CF₂CF₂O)CH₂CF₂-A,

   CH₂=CFCF₂OCH₂CF₂CH₂-A,

   CH₂=CFCF₂O(CH₂CF₂CF₂O)CH₂CF₂CH₂-A,

   CH₂=CFCF₂OCF₂CF₂-A, CH₂=CFCF₂O(CF₂CF₂CF₂O)CF₂CF₂-A,

   CH₂=CFCF₂OCF₂CF₂CH₂-A,

   CH₂=CFCF₂O(CF₂CF₂CF₂O)CF₂CF₂CH₂-A,

   CH₂=CFCF₂OCF₂-A, CH₂=CFCF₂O(CF₂CF₂O)CF₂-A,

   CH₂=CFCF₂OCF₂CH₂-A,

   CH₂=CFCF₂O(CF₂CF₂O)CF₂CH₂-A,
and, in particular, 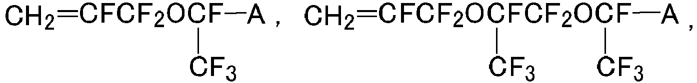 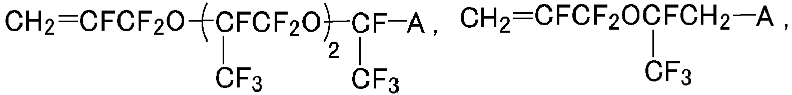 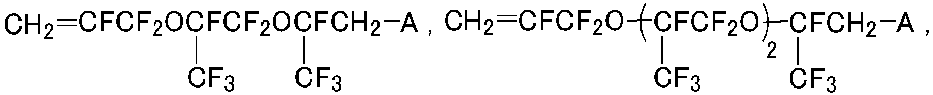
are preferable.

In the monomer represented by the general formula (1A), A in the formula (1A) is preferably -COOM, and specifically the monomer represented by the general formula (1A) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

Examples of the monomer represented by the general formula (1) further include monomers represented by the following formula:

CF₂=CFCF₂-O-Rf-A

wherein Rf and A are as described above.

More specific examples include:

CF₂=CFCF₂OCF₂CF₂CF₂-A,

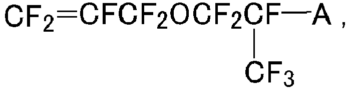

CF₂=CFCF₂OCF₂CF₂CF₂CH₂-A,

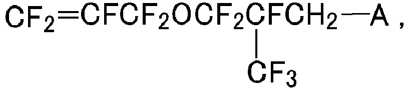

and the like.

The monomer (I) is also preferably a monomer (2) represented by the general formula (2).

The fluoropolymer is preferably a fluoropolymer (2) containing, as the polymerization unit (I), a polymerization unit (2) derived from a monomer (2) represented by the general formula (2):

CX₂=CY(-O-Rf-A) (2)

wherein X is the same or different and is H or F; Y is H, F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the general formula (2), each X is H or F. X may be both F, or at least one may be H. For example, one may be F and the other may be H, or both may be H.

In the general formula (2), Y is H, F, an alkyl group, or a fluorine-containing alkyl group. The alkyl group is an alkyl group that does not contain a fluorine atom, and has one or more carbon atoms. The alkyl group preferably has 6 or less carbon atoms, more preferably 4 or less carbon atoms, and even more preferably 3 or less carbon atoms. The fluorine-containing alkyl group is an alkyl group containing at least one fluorine atom, and has one or more carbon atoms. The fluorine-containing alkyl group preferably has 6 or less carbon atoms, more preferably 4 or less carbon atoms, and even more preferably 3 or less carbon atoms. Y is preferably H, F, or CF₃, and more preferably F.

In the general formula (2), at least one of X and Y preferably contains a fluorine atom. For example, X may be H, and Y and Z may be F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure having a terminal oxygen atom and that contains an ether bond between carbon atoms.

The fluorine-containing alkylene group of Rf preferably has 2 or more carbon atoms. The number of carbon atoms is preferably 30 or less, more preferably 20 or less, even more preferably 10 or less, and particularly preferably 5 or less. Examples of the fluorine-containing alkylene group include - CF₂-, -CH₂CF₂-, -CF₂CF₂-, -CF₂CH₂-, -CF₂CF₂CH₂-, -CF(CF₃)-, - CF(CF₃)CF₂-, -CF (CF₃)CH₂-, -CF₂CF₂CF₂-, and -CF₂CF₂CF₂CF₂-. The fluorine-containing alkylene group is preferably a perfluoroalkylene group, and more preferably an unbranched linear perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, and particularly preferably 5 or less. The fluorine-containing alkylene group having an ether bond is also preferably a divalent group represented by, for example, the general formula: 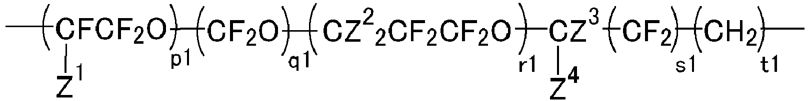 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF₂CF (CF₃)OCF₂CF₂-, -CF₂CF (CF₃)OCF₂CF₂CF₂-, -CF₂(CF₃)-O-CF(CF₃)-, -(CF(CF₃)CF₂-O)ₙ-CF(CF₃)- (wherein n is an integer of 1 to 10), -CF (CF₃)CF₂-O-CF(CF₃)CH₂-, -(CF(CF₃)CF₂-O) ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

The fluorine-containing alkylene group having a keto group preferably has 3 or more carbon atoms. The number of carbon atoms of the fluorine-containing alkylene group having a keto group is preferably 60 or less, more preferably 30 or less, even more preferably 12 or less, and particularly preferably 5 or less.

Examples of the fluorine-containing alkylene group having a keto group include -CF₂CF (CF₃)CO-CF₂-, -CF₂CF (CF₃)CO-CF₂CF₂-, -CF₂CF (CF₃)CO-CF₂CF₂CF₂-, and -CF₂CF (CF₃)CO-CF₂CF₂CF₂CF₂- . The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include - CF₂CF (CF₃)C(OH)₂-CF₂-, -CF₂CF (CF₃)C(OH)₂-CF₂CF₂-, - CF₂CF (CF₃)C(OH)₂-CF₂CF₂CF₂-, and -CF₂CF (CF₃)C(OH)₂-CF₂CF₂CF₂CF₂-.

The monomer represented by the general formula (2) is preferably at least one selected from the group consisting of monomers represented by the general formulae (2a), (2b), (2c), (2d), (2e), (2f), and (2g) :

CF₂=CF-O-(CF₂)ₙ₁-A (2a)

wherein n1 represents an integer of 1 to 10, and A is as defined above;

CF₂=CF-O-(CF₂C(CF₃)F)ₙ₂-A (2b)

wherein n2 represents an integer of 1 to 5, and A is as defined above;

CF₂=CF-O-(CFX¹)ₙ₃-A (2c)

wherein X¹ represents F or CF₃, n3 represents an integer of 1 to 10, and A is as defined above;

CF₂=CF-O-(CF₂CFX¹O)ₙ₄-(CF₂)ₙ₆-A (2d)

wherein n4 represents an integer of 1 to 10, n6 represents an integer of 1 to 3, and A and X¹ are as defined above;

CF₂=CF-O-(CF₂CF₂CFX¹O)ₙ₅-CF₂CF₂CF₂-A (2e)

wherein n5 represents an integer of 0 to 10, and A and X¹ are as defined above;

CF₂=CF-O-(CF₂)ₙ₇-O-(CF₂)ₙ₃-A (2f)

wherein n7 represents an integer of 1 to 10, n8 represents an integer of 1 to 3, and A is as described above; and

CF₂=CF[OCF₂CF(CF₃)]ₙ₉O(CF₂)ₙ₁₀O[CF(CF₃)CF₂O]ₙ₁₁CF(CF₃)-A (2g)

wherein n9 represents an integer of 0 to 5, n10 represents an integer of 1 to 8, n11 represents an integer of 0 to 5, and A is as described above.

In the general formula (2a), n1 is preferably an integer of 5 or less, and more preferably an integer of 2 or less.

Examples of the monomer represented by the general formula (2a) include CF₂=CF-O-CF₂COOM, CF₂=CF(OCF₂CF₂COOM), CF₂=CF(O(CF₂)₃COOM), CF₂=CF(OCF₂CF₂SO₃M), CF₂=CFOCF₂SO₃M, and CF₂=CFOCF₂CF₂CF₂SO₃M, wherein M is as defined above.

In the general formula (2b), n2 is preferably an integer of 3 or less from the viewpoint of dispersion stability of the resulting composition.

In the general formula (2c), n3 is preferably an integer of 5 or less from the viewpoint of water-solubility, A is preferably -COOM, and M is preferably H, Na, or NH₄.

In the general formula (2d), X¹ is preferably -CF₃ from the viewpoint of dispersion stability of the composition, n4 is preferably an integer of 5 or less from the viewpoint of water-solubility, A is preferably -COOM, and M is preferably H, Na, or NH₄.

Examples of the monomer represented by the general formula (2d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂SO₃M, CF₂=CFOCF₂CF(CF₃)OCF₂CF₂SO₃M, and CF₂=CFOCF₂CF(CF₃)OCF₂CF₂CF₂SO₃M, wherein M represents H, NH₄, or an alkali metal.

In the general formula (2e), n5 is preferably an integer of 5 or less from the viewpoint of water-solubility, A is preferably -COOM, and M is preferably H or NH₄.

An example of the monomer represented by the general formula (2e) is CF₂=CFOCF₂CF₂CF₂COOM, wherein M represents H, Na, NH₄, or an alkali metal.

In the general formula (2f), n7 is preferably an integer of 5 or less in terms of water solubility, A is preferably - COOM or -SO₃M, and more preferably -COOM. M is preferably H, Na, K, or NH₄.

An example of the monomer represented by the general formula (2f) is CF₂=CF-O-(CF₂)₃-O-CF₂-COOM, wherein M represents H, NH₄, or an alkali metal.

In the general formula (2g), n9 is preferably an integer of 3 or less in terms of water solubility, n10 is preferably an integer of 3 or less, n11 is preferably an integer of 3 or less, and A is preferably -COOM or -SO₃M, and more preferably - COOM. M is preferably H, Na, K, or NH₄.

Examples of the monomer represented by the general formula (2g) include CF₂=CFO(CF₂)₂OCF(CF₃)COOM, CF₂=CFOCF₂CF₂OCF(CF₃)CF₂OCF(CF₃)COOM, CF₂=CFOCF₂CF(CF₃)OCF₂CF₂OCF(CF₃)COOM, CF₂=CF[OCF₂CF(CF₃)]₂O(CF₂)₂O[CF(CF₃)CF₂O]CF(CF₃)COOM, and CF₂=CF[OCF₂CF(CF₃)]₃O(CF₂)₂O[CF(CF₃)CF₂O]₃CF(CF₃)COOM, wherein M represents H, NH₄, or an alkali metal.

The monomer (I) is also preferably a monomer (3) represented by the general formula (3).

The fluoropolymer is preferably a fluoropolymer (3) containing, as the polymerization unit (I), a polymerization unit (3) derived from a monomer (3) represented by the general formula (3):

CX₂=CY(-Rf-A) (3)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The fluorine-containing alkylene group having 2 to 100 carbon atoms and having an ether bond is an alkylene group which does not include a structure having a terminal oxygen atom and contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by the general formula (3a):

CF₂=CF-(CF₂)ₙ₁-A (3a)

wherein n1 represents an integer of 1 to 10, and A is as defined above; and a monomer represented by the general formula (3b):

CF₂=CF-(CF₂C(CF₃)F)ₙ₂-A (3b)

wherein n2 represents an integer of 1 to 5, and A is as defined above.

In the general formula (3a) and the general formula (3b), A is preferably -SO₃M or COOM, and M is preferably H, a metal atom, NR⁷₄, imidazolium optionally having a substituent, pyridinium optionally having a substituent, or phosphonium optionally having a substituent. R⁷ represents H or an organic group.

In the general formula (3a), n1 is preferably an integer of 5 or less, and more preferably an integer of 2 or less. A is preferably -COOM, and M is preferably H or NH₄.

Examples of the monomer represented by the general formula (3a) include CF₂=CFCF₂COOM, wherein M is as defined above.

In the general formula (3b), n2 is preferably an integer of 3 or less from the viewpoint of dispersion stability of the resulting composition, A is preferably -COOM, and M is preferably H or NH₄.

Next, a suitable configuration wherein m is an integer of 2 or more in the general formula (I) will now be described.

The monomer (I) is also preferably at least one selected from the group consisting of monomers represented by the general formula (4a) and the general formula (4b).

The fluoropolymer is also preferably a polymer (4) containing a polymerization unit (4) derived from at least one monomer selected from the group consisting of monomers represented by the general formulae (4a) and (4b):

CF₂=CF-CF₂-O-Q^{F1}-CF(-Q^{F2}-CZ²Z²-A)₂ (4a)

wherein Z¹, Z², and A are as defined above, Q^{F1} and Q^{F2} are the same or different and are each a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ²Z²-A)₂ (4b)

wherein Z¹, Z², A, Q^{F1}, and Q^{F2} are as defined above.

Examples of the monomers represented by the general formulae (4a) and (4b) include: 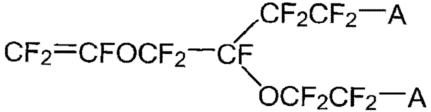 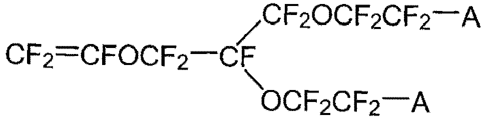 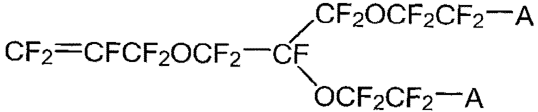 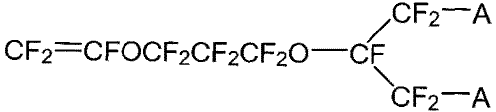 and the like.

The monomer (I) is preferably at least one selected from the group consisting of the monomer (1), the monomer (2), and monomer (3), more preferably at least one selected from the group consisting of the monomer (1) and the monomer (2), even more preferably the monomer (2), and yet more preferably the monomer (2a) represented by the general formula (2a) because a fluoropolymer having better water solubility can be obtained.

The fluoropolymer is preferably at least one selected from the group consisting of the fluoropolymer (1), the fluoropolymer (2), and the fluoropolymer (3), more preferably at least one selected from the group consisting of the fluoropolymer (1) and the fluoropolymer (2), and even more preferably the fluoropolymer (2) because better water solubility can be attained.

The fluoropolymer of the present disclosure may be a copolymer consisting of the polymerization unit (I) and the polymerization unit (II), or may be a copolymer containing the polymerization unit (I), the polymerization unit (II), and a polymerization unit derived from a further monomer copolymerizable with the monomer (I) and the monomer (II). The polymerization unit (I) may be the same or different at each occurrence, and may contain polymerization units (I) derived from two or more different monomers (I) represented by the general formula (I).

The further monomer is a monomer represented by the general formula CFR=CR₂ wherein R is independently H, F, or a perfluoroalkyl group having 1 to 4 carbon atoms, provided that CHF=CHF is excluded. Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E-form), and CHF=CHCF₃ (Z-form).

In particular, from the viewpoint of good copolymerizability, the further monomer is preferably at least one selected from the group consisting of tetrafluoroethylene (CF₂=CF₂), chlorotrifluoroethylene (CF₂=CFCl), and vinylidene fluoride (CH₂=CF₂), and more preferably at least one selected from the group consisting of tetrafluoroethylene and vinylidene fluoride. Accordingly, the polymerization unit derived from the further monomer is preferably a polymerization unit derived from tetrafluoroethylene. The polymerization unit derived from the further monomer may be the same or different at each occurrence, and the fluoropolymer may contain a polymerization unit derived from two or more different further monomers.

Examples of the further monomer include monomers represented by the general formula (n1-2): 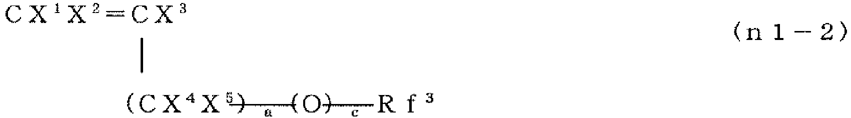 wherein X¹ and X² are the same or different and H or F; X³ is H, F, Cl, CH₃, or CF₃; X⁴ and X⁵ are the same or different and H or F; a and c are the same or different and 0 or 1; and Rf³ is a fluorine-containing alkyl group having 1 to 40 carbon atoms or a fluorine-containing alkyl group having 2 to 100 carbon atoms and having an ether bond.

Specifically, preferable examples include CH₂=CFCF₂-O-Rf³, CF₂=CF-O-Rf³, CF₂=CFCF₂-O-Rf³, CF₂=CF-Rf³, CH₂=CH-Rf³, and CH₂=CHO-Rf³ (wherein Rf³ is as in the above formula (n1-2)).

Examples of the further monomer also include fluorine-containing acrylate monomers represented by the formula (n2-1) : 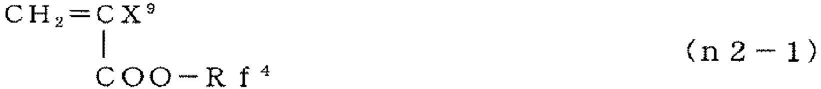
wherein X⁹ is H or CH₃; and Rf⁴ is a fluorine-containing alkyl group having 1 to 40 carbon atoms or a fluorine-containing alkyl group having 2 to 100 carbon atoms and having an ether bond. Examples of the Rf⁴ group include: 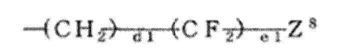
wherein Z⁸ is H, F, or Cl; dl is an integer of 1 to 4; and e1 is an integer of 1 to 10,

   -CH(CF₃)₂. 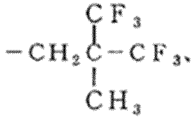 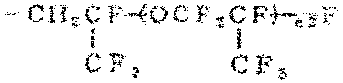
wherein e2 is an integer of 1 to 5, 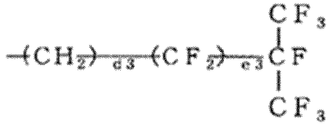
wherein d3 is an integer of 1 to 4; and e3 is an integer of 1 to 10.

Examples of the further monomer also include fluorine-containing vinyl ether represented by the formula (n2-2):

CH₂=CHO-Rf⁵ (n2-2)

wherein Rf⁵ is a fluorine-containing alkyl group having 1 to 40 carbon atoms or a fluorine-containing alkyl group having 2 to 100 carbon atoms and having an ether bond.

Specifically, preferable examples of the monomer represented by the general formula (n2-2) include: 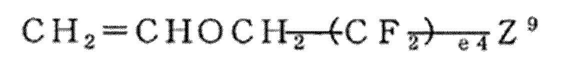
wherein Z⁹ is H or F; and e4 is an integer of 1 to 10, 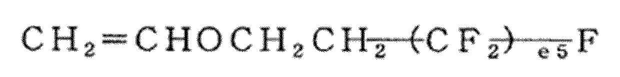
wherein e5 is an integer of 1 to 10, 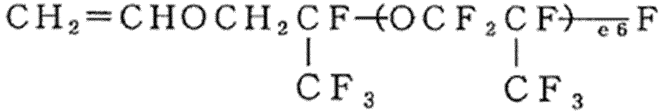
wherein e6 is an integer of 1 to 10.

More specific examples include:

CH₂=CHOCH₂CF₂CF₂H,

CH₂=CHOCH₂CF₂CF₃.

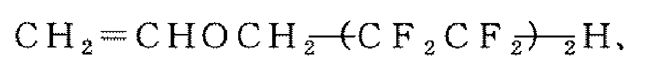

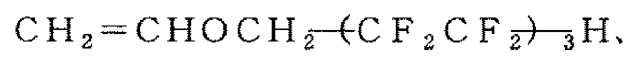

CH₂=CHOCH₂CF₃. 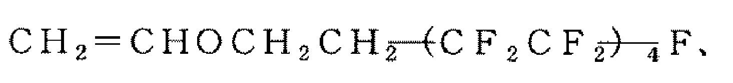 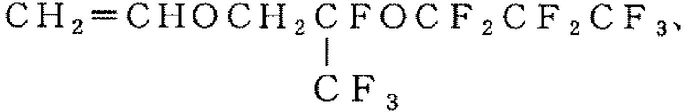 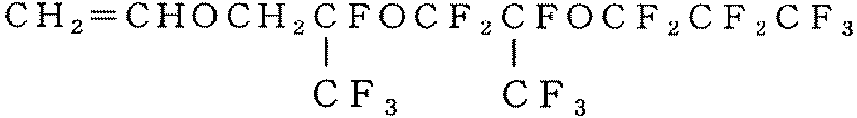 and the like.

In addition, examples also include fluorine-containing allyl ether represented by the general formula (n2-3):

CH₂=CHCH₂O-Rf⁶ (n2-3)

wherein Rf⁶ is a fluorine-containing alkyl group having 1 to 40 carbon atoms or a fluorine-containing alkyl group having 2 to 100 carbon atoms and having an ether bond; and fluorine-containing vinyl monomers represented by the general formula (n2-4):

CH₂=CH-Rf⁷ (n2-4)

wherein Rf⁷ is a fluorine-containing alkyl group having 1 to 40 carbon atoms or a fluorine-containing alkyl group having 2 to 100 carbon atoms and having an ether bond.

Specific examples of monomers represented by the general formulae (n2-3) and (n2-4) include monomers such as:

CH₂=CHCH₂OCH₂CF₂CF₂H.

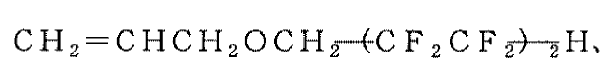

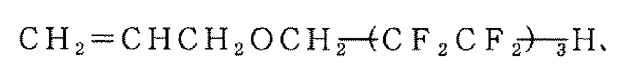

CH₂=CHCH₂OCH₂CF₂CF₃,

CH₂=CHCH₂OCH₂CF₃,

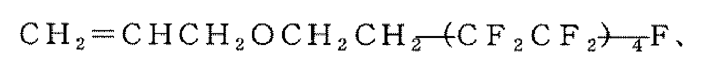

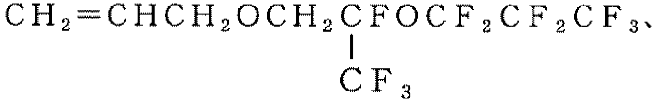

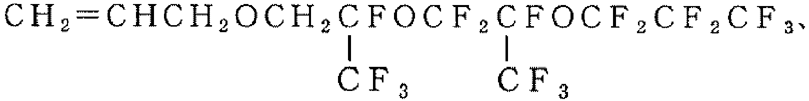

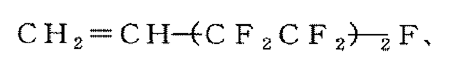

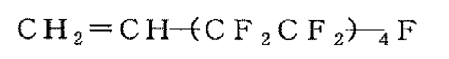

and the like.

The lower limit of the content of the polymerization unit (I) in the fluoropolymer is, in order of preference, 20 mol% or more, 40 mol% or more, or 45 mol% or more based on the entirety of polymerization units constituting the fluoropolymer because water solubility is more improved.

The upper limit of the content of the polymerization unit (I) in the fluoropolymer is, in order of preference, 99 mol% or less, 90 mol% or less, or 80 mol% or less based on the entirety of polymerization units constituting the fluoropolymer because the decomposition initiation temperature is more increased.

The lower limit of the content of the polymerization unit (II) in the fluoropolymer is, in order of preference, 1 mol% or more, 10 mol% or more, or 20 mol% or more based on the entirety of polymerization units constituting the fluoropolymer because the decomposition initiation temperature is more increased.

The upper limit of the content of the polymerization unit (II) in the fluoropolymer is, in order of preference, 80 mol% or less, 60 mol% or less, or 55 mol% or less based on the entirety of polymerization units constituting the fluoropolymer because water solubility is more improved.

In the fluoropolymer, the upper limit of the content of the polymerization unit derived from the further monomer copolymerizable with the monomer (I) and the monomer (II) is, in order of preference, 59 mol% or less, 45 mol% or less, 35 mol% or less, 25 mol% or less, 15 mol% or less, 5 mol% or less, or 1 mol% or less.

The lower limit of the number average molecular weight of the fluoropolymer is, in order of preference, 0.3 × 10⁴ or more, 0.4 × 10⁴ or more, 0.5 × 10⁴ or more, 0.7 × 10⁴ or more, 0.8 × 10⁴ or more, 1.0 × 10⁴ or more, 1.2 × 10⁴ or more, 1.4 × 10⁴ or more, 1.6 × 10⁴ or more, 1.8 × 10⁴ or more, 2.0 × 10⁴ or more, 3.0 × 10⁴ or more, or 4.0 × 10⁴ or more. The upper limit of the number average molecular weight of the fluoropolymer is, in order of preference, 75.0 × 10⁴ or less, 50.0 × 10⁴ or less, 40.0 × 10⁴ or less, 30.0 × 10⁴ or less, or 20.0 × 10⁴ or less.

The lower limit of the weight average molecular weight of the fluoropolymer is, in order of preference, 0.4 × 10⁴ or more, 0.5 × 10⁴ or more, 0.6 × 10⁴ or more, 0.8 × 10⁴ or more, 1.0 × 10⁴ or more, 1.2 × 10⁴ or more, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, 5.1 × 10⁴ or more, 9.0 × 10⁴ or more, 15.0 × 10⁴ or more, 20.0 × 10⁴ or more, or 25.0 × 10⁴ or more. The upper limit of the weight average molecular weight of the fluoropolymer is, in order of preference, 150.0 × 10⁴ or less, 100.0 × 10⁴ or less, 60.0 × 10⁴ or less, 50.0 × 10⁴ or less, or 40.0 × 10⁴ or less.

The molecular weight distribution (Mw/Mn) of the fluoropolymer is, in order of preference, 3.0 or less, 2.7 or less, 2.4 or less, 2.2 or less, 2.0 or less, 1.9 or less, 1.7 or less, 1.5 or less, 1.4 or less, or 1.3 or less.

The number average molecular weight and the weight average molecular weight are molecular weight values calculated by gel permeation chromatography (GPC) using monodisperse polystyrene as a standard. When measurement by GPC is not possible, the number average molecular weight of the fluoropolymer can be determined by the correlation between the melt flow rate and the number average molecular weight calculated from the number of terminal groups obtained by NMR, FT-IR, or the like. The melt flow rate can be measured in accordance with JIS K 7210.

The acid value of the fluoropolymer is preferably 60 or more, more preferably 90 or more, even more preferably 120 or more, particularly preferably 150 or more, and most preferably 180 or more, and the upper limit is not limited and is preferably 300 or less.

The acid value of the fluoropolymer, when the fluoropolymer has an acid salt-type functional group (such as -SO₃M or -COOM, wherein M is a metal atom, -NR⁷₄, imidazolium optionally having a substituent, pyridinium optionally having a substituent, or phosphonium optionally having a substituent) other than an acid-type functional group such as -SO₃H or -COOH, can be measured by converting the acid salt-type functional group to an acid-type functional group and then performing acid-base titration of the acid-type functional group.

The fluoropolymer usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or the fluoroalkyl group preferably has 1 to 20 carbon atoms. These terminal groups are, in general, produced from an initiator or a chain transfer agent used to form the fluoropolymer or produced during a chain transfer reaction.

The fluoropolymer preferably has an ion exchange rate (IXR) of 43 or less. The IXR is defined as the number of carbon atoms in the polymer backbone based on the ionic group. A precursor group that becomes ionic by hydrolysis (such as - SO₂F) is not regarded as an ionic group for the purpose of determining the IXR.

IXR is preferably 0.5 or more, more preferably 1 or more, even more preferably 3 or more, yet more preferably 4 or more, and particularly preferably 5 or more. IXR is more preferably 33 or less, particularly preferably 23 or less, further preferably 12 or less, and most preferably 10 or less.

The ion exchange capacity of the fluoropolymer is, in order of preference, 0.80 meq/g or more, 1.50 meq/g or more, 1.75 meq/g or more, 2.00 meq/g or more, 2.20 meq/g or more, 2.50 meq/g or more, 2.750 meq/g or more, 3.00 meq/g or more, 3.20 meq/g or more, 3.50 meq/g or more, 4.0 meq/g or more, 4.50 meq/g or more, or 5.00 meq/g or more. Ion exchange capacity is the content of ionic groups (anionic groups) in the fluoropolymer and can be calculated from the composition of the fluoropolymer.

In the fluoropolymer, the ionic groups (anionic groups) are typically distributed along the polymer backbone. The fluoropolymer contains the polymer backbone together with a repeating side chain bonded to this backbone, and this side chain preferably has an ionic group.

The fluoropolymer preferably has water solubility. Water solubility means the property of being readily dissolved or dispersed in an aqueous medium. The particle size of a fluoropolymer having water solubility cannot be measured by, for example, dynamic light scattering (DLS), or such a fluoropolymer shows a particle size of 10 nm or less.

The fluoropolymer preferably has sufficient water solubility. In general, a higher content of the fluoropolymer in an aqueous solution makes it more difficult to sufficiently dissolve or disperse the fluoropolymer in an aqueous medium. Accordingly, it can be said that a fluoropolymer, the particle size of which cannot be measured by dynamic light scattering (DLS) even when the fluoropolymer content in an aqueous solution is high, is highly water-soluble. Preferably, the particle size of the fluoropolymer cannot be measured even when the fluoropolymer is contained in an aqueous solution in a content of 1.0% by mass. Preferably, the particle size cannot be measured even when the fluoropolymer is contained in an aqueous solution in a content of more preferably 1.5% by weight and even more preferably 2.0% by weight.

The viscosity of an aqueous solution of the fluoropolymer is preferably 5.0 mPa.s or more, more preferably 8.0 mPa.s or more, even more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and further preferably 20.0 mPa.s or less.

The viscosity of an aqueous solution of the fluoropolymer can be determined by regulating the content of the fluoropolymer in the aqueous solution to 33% by mass based on the aqueous solution and measuring the viscosity of the resulting aqueous solution at 20°C using a tuning fork vibration viscometer (model number: SV-10) manufactured by A&D Co., Ltd.

The critical micelle concentration (CMC) of the fluoropolymer is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the fluoropolymer can be determined by measuring the surface tension. The surface tension can be measured with, for example, a surface tensiometer CBVP-A3 manufactured by Kyowa Interface Science Co., Ltd.

The aqueous solution containing the fluoropolymer and an aqueous medium can be used in various applications. The content of the fluoropolymer in the aqueous solution is, based on the aqueous solution, preferably 0.1% by mass or more, more preferably 1.0% by mass or more, even more preferably 1.5% by mass or more, particularly preferably 2.0% by mass or more, yet more preferably 5.0% by mass or more, and most preferably 10% by mass or more, and is preferably 50% by mass or less and more preferably 40% by mass or less.

The fluoropolymer or the fluoropolymer-containing aqueous solution may be substantially free of a dimer and a trimer of the monomer (I). The dimer and the trimer of the monomer (I) are usually produced when polymerizing the monomer (I) to obtain the fluoropolymer. The content of the dimer and the trimer in the fluoropolymer is 1.0% by mass or less, preferably 0.1% by mass or less, more preferably 0.01% by mass or less, even more preferably 0.001% by mass or less, and particularly preferably 0.0001% by mass or less based on the fluoropolymer.

The fluoropolymer or the fluoropolymer-containing aqueous solution may be substantially free of a dimer and a trimer composed of the monomer (I) and the monomer (II). The dimer and the trimer composed of the monomer (I) and the monomer (II) are usually produced when polymerizing the monomer (I) and the monomer (II) to obtain the fluoropolymer. The content of the dimer and the trimer in the fluoropolymer is 1.0% by mass or less, preferably 0.1% by mass or less, more preferably 0.01% by mass or less, even more preferably 0.001% by mass or less, and particularly preferably 0.0001% by mass or less based on the fluoropolymer.

The content of the dimer and the trimer in the fluoropolymer can be determined by performing gel permeation chromatography (GPC) analysis on the fluoropolymer and calculating the total proportion of the peak areas (area percentages) of the dimer and the trimer to the total area of all peaks of the chromatogram obtained by GPC analysis.

When the content of the dimer and the trimer in the fluoropolymer is less than 0.5% by mass based on the fluoropolymer, the content can be determined by liquid chromatography-mass spectrometry (LC/MS) measurement.

Specifically, aqueous solutions having five or more content levels of the monomer (I) are prepared, the LC/MS analysis is performed with respect to each content, the relationship between a content and an area based on that content (the integral value of the peak) is plotted, and a calibration curve of the monomer (I) is created. Moreover, calibration curves of the dimer and the trimer of the monomer (I) or the dimer and the trimer composed of the monomer (I) and the monomer (II) are created from the calibration curve of the monomer (I).

Methanol is added to the fluoropolymer to prepare a mixture, the mixture is filtered using an ultrafiltration disc (a molecular weight cut off of 3,000 Da), and the resulting recovered solution is subjected to LC/MS analysis.

Then, using the calibration curves, the chromatographic areas (the integral values of peaks) of the dimer and the trimer of the monomer (I) or the dimer and the trimer composed of the monomer (I) and the monomer (II) can be converted to the respective contents of the dimer and the trimer.

The content of the fraction having a molecular weight of 3,000 or less in the fluoropolymer or the fluoropolymer-containing aqueous solution may be 3.7% or less, and is preferably 3.2% or less, even more preferably 2.7% or less, yet more preferably 1.7% or less, further preferably 1.2% or less, particularly preferably 1.0% or less, and most preferably 0.5% or less based on the fluoropolymer. The lower limit of the content of the fraction having a molecular weight of 3,000 or less is not limited, and is, for example, 0.01%. The content of the fraction having a molecular weight of 3,000 or less can be calculated from the peak area of GPC. The fraction having a molecular weight of 3,000 or less includes all compounds having a molecular weight of 3,000 or less.

The content of the fraction having a molecular weight of 2,000 or less in the fluoropolymer or the fluoropolymer-containing aqueous solution may be 3.2% or less, and is preferably 2.7% or less, more preferably 2.2% or less, even more preferably 1.7% or less, further preferably 1.2% or less, and particularly preferably 0.6% or less based on the fluoropolymer. The lower limit of the content of the fraction having a molecular weight of 2,000 or less is not limited, and is, for example, 0.01%. The content of the fraction having a molecular weight of 2,000 or less can be calculated from the peak area of GPC. The fraction having a molecular weight of 2,000 or less includes all compounds having a molecular weight of 2,000 or less.

The content of the fraction having a molecular weight of 1,500 or less in the fluoropolymer or the fluoropolymer-containing aqueous solution may be 2.7% or less, and is preferably 2.2% or less, more preferably 1.7% or less, even more preferably 1.2% or less, and further preferably 0.6% or less based on the fluoropolymer. The lower limit of the content of the fraction having a molecular weight of 1,500 or less is not limited, and is, for example, 0.01%. The content of the fraction having a molecular weight of 1,500 or less can be calculated from the peak area of GPC. The fraction having a molecular weight of 1,500 or less includes all compounds having a molecular weight of 1,500 or less.

The content of the fraction having a molecular weight of 1,000 or less in the fluoropolymer or the fluoropolymer-containing aqueous solution may be 2.2% or less, and is preferably 1.7% or less, more preferably 1.2% or less, and 0.6% or less based on the fluoropolymer. The lower limit of the content of the fraction having a molecular weight of 1,000 or less is not limited, and is, for example, 0.01%. The content of the fraction having a molecular weight of 1,000 or less can be calculated from the peak area of GPC. The fraction having a molecular weight of 1,000 or less includes all compounds having a molecular weight of 1,000 or less.

The fluoropolymer or the fluoropolymer-containing aqueous solution is, preferably, substantially free of a fluorine-containing surfactant. Herein, the phrase "substantially free of a fluorine-containing surfactant" means that the content of the fluorine-containing surfactant in the fluoropolymer or in the aqueous solution is 10 ppm by mass or less, preferably 1 ppm by mass or less, more preferably 100 ppb by mass or less, even more preferably 10 ppb by mass or less, yet more preferably 1 ppb by mass or less, and particularly preferably less than the detection limit of measurement by liquid chromatography-mass spectrometry (LC/MS).

The content of the fluorine-containing surfactant can be determined by a known method. For example, it can be quantified by LC/MS analysis.

First, methanol is added to the fluoropolymer or the aqueous solution, extraction is performed, and the resulting extract is subjected to LC/MS analysis. To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted to the content of the fluorine-containing surfactant.

The fluorine-containing surfactant will be described below in the description concerning the polymerization of the monomer (I) and the monomer (II).

### (Coating composition)

The fluoropolymer or the fluoropolymer-containing aqueous solution can be used in various applications. The fluoropolymer or the fluoropolymer-containing aqueous solution can be suitably used, for example, as a component of a coating composition.

The coating composition is preferably a composition containing the fluoropolymer and at least one solvent selected from the group consisting of water and alcohol. The use of such a coating composition enables a coating film having an excellent antireflection effect to be formed. By using a coating composition that contains the fluoropolymer containing a large amount of the polymerization unit (I), a uniform coating film having a desired film thickness can be readily formed, also the antireflection effect and the hydrophilicity of the resulting coating film can be increased, and thus a sufficient developer dissolution rate can be obtained. Also, a higher content of the polymerization unit (I) in the fluoropolymer is preferable because the coating film can be provided with a lower refractive index and better developer solubility.

The solvent contained in the coating composition is at least one selected from the group consisting of water and alcohol. The alcohol is preferably a lower alcohol having 1 to 6 carbon atoms, and more preferably at least one selected from the group consisting of methanol, ethanol, isopropanol, n-propanol, and butyl alcohol.

The coating composition may further contain a water-soluble organic solvent (excluding alcohol), at least one basic substance selected from ammonia and organic amine, a surfactant, acid, a water-soluble polymer, a photoacid generator, an antifoaming agent, a light absorber, a storage stabilizer, a preservative, an adhesion aid, dye, and the like.

The fluoropolymer content in the coating composition is preferably 0.1 to 50% by mass, more preferably 0.5 to 30% by mass, even more preferably 1 to 20% by mass, and particularly preferably 2 to 10% by mass based on the coating composition.

A coating film can be produced by applying the coating composition to a substrate. The method for applying the coating composition is not limited, and includes roll coating, casting, dipping, spin coating, water casting, die coating, Langmuir-Blodgett technique, and the like.

Examples of the substrate to which the coating composition is applied include silicon wafers and quartz glass.

In particular, when precise control of the film thickness is required, application by spin coating is suitable. When spin coating is used, the film thickness of the coating film is determined by the number of rotations of the substrate, the rotation time, the viscosity of the coating composition, and the like. Due to the characteristics of an apparatus (a spin coater), an excessively low rotational speed or an excessively short rotation time likely results in variations in film thickness, and thus coating is generally performed at a high rotational speed for a certain period of time. However, when the coating composition is applied at a high rotational speed for a certain amount of time, the resulting film thickness is small. Accordingly, it is not easy to produce a relatively thick film by using spin coating while suppressing variations in film thickness. The coating composition of the present disclosure is capable of imparting excellent effects such as hydrophilicity to the coating film and, at the same time, readily forming a relatively thick film while suppressing variations in film thickness even when containing the fluoropolymer in a high concentration in addition to containing the fluoropolymer containing a large amount of the polymerization unit (I) because a coating film having a uniform film thickness can be formed using the coating composition.

The coating film obtained from the coating composition is suitable as, for example, a pellicle and an antireflection film. For example, applying the coating composition to a photoresist layer enables a photoresist laminate having a photoresist layer and an antireflection film to be prepared.

### (Method for producing fluoropolymer)

The fluoropolymer of the present disclosure can be produced by a production method comprising polymerizing the monomer (I) and the monomer (II) to produce a fluoropolymer.

The polymerization temperature of the monomer (I) and the monomer (II) is preferably 70°C or lower, more preferably 65°C or lower, even more preferably 60°C or lower, yet more preferably 55°C or lower, further preferably 50°C or lower, particularly preferably 45°C or lower, and most preferably 40°C or lower, and is preferably 10°C or higher, more preferably 15°C or higher, and even more preferably 20°C or higher because a fluoropolymer having a higher molecular weight can be readily produced.

In the production method, the monomer (I) and the monomer (II) may be copolymerized with the above-described further monomer.

In the production method, polymerization may be performed in the presence of a pH adjuster. The pH adjuster may be added before the beginning of polymerization or after the beginning of polymerization.

Examples of the pH adjuster include ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate. The pH can be measured with a pH meter manufactured by Orion.

The polymerization pressure is usually atmospheric pressure to 10 MPaG. The polymerization pressure is suitably determined in accordance with the types of the monomers used, the molecular weight of the target fluoropolymer, and the reaction rate.

The polymerization time is usually 1 to 200 hours, and may be 5 to 100 hours.

In the production method, the polymerization of the monomer (I) and the monomer (II) may be performed in an aqueous medium, or may be performed in the absence of an aqueous medium. Also, the polymerization of the monomer (I) and the monomer (II) may be performed in the absence of an aqueous medium and in the presence of a non-aqueous medium (for example, an organic solvent such as toluene) in an amount of less than 10% by mass based on the amount of the monomer containing the monomer (I) and the monomer (II). The polymerization of the monomer (I) and the monomer (II) may be emulsion polymerization, suspension polymerization, or bulk polymerization.

The aqueous medium is a reaction medium in which polymerization is performed, and means a water-containing liquid. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

The oxygen concentration in the reaction system of the polymerization is preferably 1,500 ppm by volume or less, more preferably 500 ppm by volume or less, even more preferably 100 ppm by volume or less, and particularly preferably 50 ppm by volume or less because a fluoropolymer having a higher molecular weight can be readily produced. The oxygen concentration in the reaction system is usually 0.01 ppm by volume or more. In the production method, the oxygen concentration in the reaction system is preferably maintained within the above range throughout the polymerization of the monomer (I) and the monomer (II).

The oxygen concentration in the reaction system of polymerization can be controlled by causing, for example, an inert gas such as nitrogen or argon, or the gaseous monomer when a gaseous monomer is used, to flow through the liquid phase or the gas phase in the reactor. The oxygen concentration in the reaction system of the polymerization can be determined by measuring and analyzing the gas emitted from the discharge gas line of the polymerization system with a low-concentration oxygen analyzer.

In the production method, the monomer (I) and the monomer (II) can be polymerized in the presence of a polymerization initiator. The polymerization initiator is not limited as long as it can generate radicals within the polymerization temperature range, and known oil-soluble and/or water-soluble polymerization initiators can be used. The polymerization initiator can be combined with a reducing agent or the like to form a redox agent and initiate the polymerization. The concentration of the polymerization initiator is suitably determined according to the type of monomer, the molecular weight of the target fluoropolymer, and the reaction rate. When the monomer (I) and the monomer (II) are polymerized in an aqueous medium, a water-soluble polymerization initiator such as persulfate is preferably used. When the monomer (I) and the monomer (II) are polymerized in the absence of an aqueous medium, an oil-soluble polymerization initiator such as a peroxide is preferably used.

As a polymerization initiator, one of persulfates (such as ammonium persulfate) and organic peroxides such as disuccinic acid peroxide and diglutaric acid peroxide can be used singly, or these polymerization initiators can be used in the form of a mixture. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

The polymerization initiator is, among others, preferably a persulfate because a fluoropolymer having a higher molecular weight can be readily produced. Examples of persulfate include ammonium persulfate, potassium persulfate, and sodium persulfate, and ammonium persulfate is preferable.

The polymerization initiator may be an oil-soluble radical polymerization initiator. The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydrododecafluorohexanoyl)peroxide, di(ω-hydrotetradecafluoroheptanoyl)peroxide, di(ω-hydrohexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chlorohexafluorobutyryl)peroxide, di(ω-chlorodecafluorohexanoyl)peroxide, di(ω-chlorotetradecafluorooctanoyl)peroxide, ω-hydrododecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production method, the polymerization initiator can be added at the beginning of polymerization, and can be added also during polymerization. The proportion of the amount of the polymerization initiator added at the beginning of polymerization to the amount of the polymerization initiator added during polymerization is preferably 95/5 to 5/95, more preferably 60/40 to 10/90, and even more preferably 30/70 to 15/85. The method for adding the polymerization initiator during polymerization is not limited, and the entire amount may be added at once, may be added in two or more divided portions, or may be added continuously.

In the production method, the total amount of the polymerization initiator added for use in polymerization is preferably 0.00001 to 10% by mass based on the aqueous medium because a fluoropolymer having a higher molecular weight can be readily produced. The total amount of the polymerization initiator added for use in polymerization is preferably 0.0001% by mass or more, more preferably 0.001% by mass or more, and even more preferably 0.01% by mass or more, and is more preferably 5% by mass or less, and even more preferably 2% by mass or less.

In the production method, the total amount of the polymerization initiator added for use in polymerization is preferably 0.001 to 10 mol% based on the total amount of monomers added for use in polymerization because a fluoropolymer having a higher molecular weight can be readily produced. The total amount of the polymerization initiator added for use in polymerization is more preferably 0.005 mol% or more, even more preferably 0.01 mol% or more, further preferably 0.1 mol% or more, and most preferably 0.5 mol% or more, and is more preferably 10 mol% or less, even more preferably 5.0 mol% or less, further preferably 2.5 mol% or less, particularly most preferably 2.2 mol% or less, and preferably 2.0 mol% or less.

In the production method, the amount of a monomer that is present and that contains the monomer (I) and the monomer (II) at the beginning of polymerization is preferably 20% by mass or more based on the amount of the aqueous medium present because a fluoropolymer having a higher molecular weight can be readily produced. The amount of the monomer present is more preferably 30% by mass or more, and even more preferably 40% by mass or more. The upper limit of the amount of the monomer present is not limited, and may be 200% by mass or less from the viewpoint of causing the polymerization to proceed smoothly. The amount of the monomer present at the beginning of polymerization is the total amount of the monomer (I), the monomer (II), and, if any, other monomers present in the reactor at the beginning of polymerization.

When the monomer (I) and the monomer (II) are polymerized in the absence of an aqueous medium, the total amount of the polymerization initiator such as a peroxide added is preferably 0.001 to 10 mol% based on the total amount of the monomer (a monomer mixture) containing the monomer (I) and the monomer (II). The total amount of the polymerization initiator added for use in polymerization is more preferably 0.005 mol% or more and even more preferably 0.01 mol% or more, and is more preferably 10 mol% or less, even more preferably 5.0 mol% or less, yet more preferably 2.5 mol% or less, particularly most preferably 2.2 mol% or less, and preferably 2.0 mol% or less.

The monomer (I) and the monomer (II) can be polymerized by charging a reactor with an aqueous medium, the monomer (I), the monomer (II), optionally a further monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the monomers, the polymerization initiator, and the further additive may be added depending on the purpose.

The monomer (I) and the monomer (II) can be polymerized substantially in the absence of a fluorine-containing surfactant. The expression "substantially in the absence of a fluorine-containing surfactant" as used herein means that the amount of the fluorine-containing surfactant is 10 ppm by mass or less based on the aqueous medium. The amount of the fluorine-containing surfactant is preferably 1 ppm by mass or less, more preferably 100 mass ppb or less, even more preferably 10 mass ppb or less, and further preferably 1 mass ppb or less based on the aqueous medium.

The fluorine-containing surfactant may be an anionic fluorine-containing surfactant. The anionic fluorine-containing surfactant may be, for example, a surfactant containing a fluorine atom, in which the total number of carbon atoms in the portion excluding the anionic group is 20 or less.

The fluorine-containing surfactant may also be a fluorine-containing surfactant in which the molecular weight of the anionic moiety is 1,000 or less.

The "anionic moiety" means the portion of the fluorine-containing surfactant excluding the cation. For example, in the case of F(CF₂)ₙ₁COOM represented by the formula (I) as will be described below, the anionic moiety is the "F(CF₂)ₙ₁COO" moiety.

Examples of the fluorine-containing surfactant include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and concentration of the fluorine-containing surfactant in water in a phase-separated octanol/water (1:1) liquid mixture containing the fluorine-containing surfactant).

The Log POW is calculated by performing HPLC on standard substances (heptanoic acid, octanoic acid, nonanoic acid, and decanoic acid) having a known octanol/water partition coefficient under conditions having column: TOSOH ODS-120T column (φ4.6 mm × 250 mm, manufactured by Tosoh Corporation), eluent: acetonitrile/0.6 mass% HClO₄ aqueous solution = 1/1 (vol/vol%), flow rate: 1.0 ml/min, sample volume: 300 µL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula (N⁰):

Xⁿ⁰-Rfⁿ⁰-Y⁰ (N⁰)

wherein Xⁿ⁰ is H, Cl, or F; Rfⁿ⁰ is linear, branched, or cyclic alkylene group having 3 to 20 carbon atoms, in which some or all H is replaced with F, where the alkylene group may contain one or more ether bonds, and some H may be replaced with Cl; and Y° is an anionic group.

The anionic group Y° may be -COOM, -SO₂M, or -SO₃M, and may be -COOM or -SO₃M.

M is H, a metal atom, NR⁷₄, imidazolium optionally having a substituent, pyridinium optionally having a substituent, or phosphonium optionally having a substituent, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In Rfⁿ⁰, 50% or more H may be replaced with fluorine.

Examples of the compound represented by the general formula (N⁰) include: a compound represented by the following general formula (N¹):

Xⁿ⁰-(CF₂)ₘ₁-Y⁰ (N¹)

wherein Xⁿ⁰ is H, Cl, or F, m1 is an integer of 3 to 15, and Y⁰ is as defined above; a compound represented by the following general formula (N²):

Rfⁿ¹-O-(CF(CF₃)CF₂O)ₘ₂CFXⁿ¹-Y⁰ (N²)

wherein Rfⁿ¹ is a perfluoroalkyl group having 1 to 5 carbon atoms, m2 is an integer of 0 to 3, Xⁿ¹ is F or CF₃, and Y⁰ is as defined above; a compound represented by the following general formula (N³) :

Rfⁿ²(CH₂)ₘ₃-(Rfⁿ³)_{q}-Y⁰ (N³)

wherein Rfⁿ² is a partially or fully fluorinated alkyl group having 1 to 13 carbon atoms and optionally containing an ether bond, m3 is an integer of 1 to 3, Rfⁿ³ is a linear or branched perfluoroalkylene group having 1 to 3 carbon atoms, q is 0 or 1, and Y° is as defined above; a compound represented by the following general formula (N⁴):

Rfⁿ⁴-O-(CYⁿ¹Yⁿ²)ₚCF₂-Y⁰ (N⁴)

wherein Rfⁿ⁴ is a linear or branched partially or fully fluorinated alkyl group having 1 to 12 carbon atoms and optionally containing an ether bond and/or a chlorine atom, Yⁿ¹ and Yⁿ² are the same or different and are each H or F, p is 0 or 1, and Y° is as defined above; and a compound represented by the following general formula (N⁵): 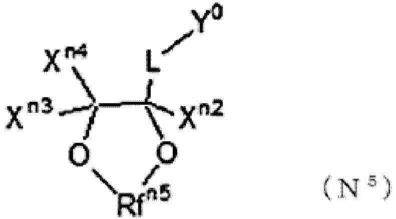 wherein Xⁿ², Xⁿ³, and Xⁿ⁴ may be the same or different and are each H, F, or a linear or branched, partially or fully fluorinated alkyl group having 1 to 6 carbon atoms and optionally containing an ether bond, Rfⁿ⁵ is a linear or branched, partially or fully fluorinated alkylene group having 1 to 3 carbon atoms and optionally containing an ether bond, L is a linking group, and Y° is as defined above, provided that the total number of carbon atoms of Xⁿ², Xⁿ³, Xⁿ⁴, and Rfⁿ⁵ is 18 or less.

Specific examples of the compound represented by the general formula (N⁰) include perfluorocarboxylic acid (I) represented by the following general formula (I), ω-H perfluorocarboxylic acid (II) represented by the following general formula (II), perfluoroether carboxylic acid (III) represented by the following general formula (III), perfluoroalkylalkylenecarboxylic acid (IV) represented by the following general formula (IV), perfluoroalkoxyfluorocarboxylic acid (V) represented by the following general formula (V), perfluoroalkylsulfonic acid (VI) represented by the following general formula (VI), ω-H perfluorosulfonic acid (VII) represented by the following general formula (VII), perfluoroalkylalkylene sulfonic acid (VIII) represented by the following general formula (VIII), alkylalkylenecarboxylic acid (IX) represented by the following general formula (IX), fluorocarboxylic acid (X) represented by the following general formula (X), alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14, M is H, a metal atom, NR⁷₄, imidazolium optionally having a substituent, pyridinium optionally having a substituent, or phosphonium optionally having a substituent, and R⁷ is H or an organic group.

The ω-H perfluorocarboxylic acid (II) is represented by the following general formula (II):

H(CF₂)ₙ₂COOM (II)

wherein n2 is an integer of 4 to 15, and M is as defined above.

The perfluoroethercarboxylic acid (III) is represented by the following general formula (III):

Rf⁷-O-(CF(CF₃)CF₂O)ₙ₃CF(CF₃)COOM (III)

wherein Rf¹ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms, Rf³ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

Rf⁴-O-CY¹Y²CF₂-COOM (V)

wherein Rf⁴ is a linear or branched, partially or fully fluorinated alkyl group having 1 to 12 carbon atoms and optionally containing an ether bond and/or a chlorine atom, Y¹ and Y² are the same or different and are H or F, and M is as defined above.

The perfluoroalkylsulfonic acid (VI) is represented by the following general formula (VI):

F(CF₂)ₙ₅SO₃M (VI)

wherein n5 is an integer of 3 to 14, and M is as defined above.

The ω-H perfluorosulfonic acid (VII) is represented by the following general formula (VII):

H(CF₂)ₙ₆SO₃M (VII)

wherein n6 is an integer of 4 to 14, and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms, n7 is an integer of 1 to 3, and M is as defined above.

The alkylalkylenecarboxylic acid (IX) is represented by the following general formula (IX):

Rf⁶(CH₂)ₙ₈COOM (IX)

wherein Rf⁶ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

Rf⁷-O-Rf⁸-O-CF₂-COOM (X)

wherein Rf⁷ is a linear or branched partially or fully fluorinated alkyl group having 1 to 6 carbon atoms and optionally containing an ether bond and/or a chlorine atom, Rf⁸ is a linear or branched partially or fully fluorinated alkyl group having 1 to 6 carbon atoms, and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched, partially or fully fluorinated alkyl group having 1 to 12 carbon atoms, optionally containing an ether bond, and optionally containing chlorine, Y¹ and Y² are the same or different and are H or F, and M is as defined above.

The compound (XII) is represented by the following general formula (XII): 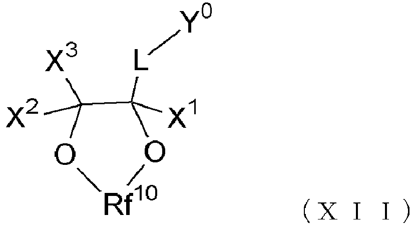 wherein X¹, X², and X³ may be the same or different and are H, F, or a linear or branched partially or fully fluorinated alkyl group having 1 to 6 carbon atoms and optionally containing an ether bond, Rf¹⁰ is a perfluoroalkylene group having 1 to 3 carbon atoms, L is a linking group, and Y° is an anionic group.

Y° may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is as defined above. Examples of the compound (XIII) include CF₂ClO(CF₂CF(CF₃)O)ₙ₉(CF₂O)ₙ₁₀CF₂COONH₄ (a mixture having an average molecular weight of 750, n9 and n10 in the formula are as defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the polymerization, the monomer (I) and the monomer (II) are polymerized substantially in the absence of compounds represented by the following formulae:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF (CF₃)CF₂OCF₂COOM,

CF₂ClCF (CF₃)OCF₂CF (CF₃)OCF₂COOM,

and 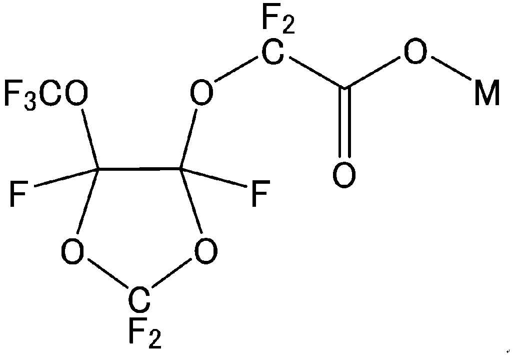 wherein M is H, a metal atom, NR⁷₄, imidazolium optionally having a substituent, pyridinium optionally having a substituent, or phosphonium optionally having a substituent, and R⁷ is H or an organic group.

In the production method, the monomer (I) and the monomer (II) are polymerized in an aqueous medium, and thus an aqueous solution containing a fluoropolymer and the aqueous medium is usually obtained. The resulting fluoropolymer-containing aqueous solution may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The fluoropolymer or the aqueous solution obtained by polymerizing the monomer (I) and the monomer (II) includes a fraction having a molecular weight of 3,000 or less, a fraction having a molecular weight of 2,000 or less, a fraction having a molecular weight of 1,500 or less, a fraction having a molecular weight of 1,000 or less, a dimer and a trimer of the monomer (I), a dimer and a trimer composed of the monomer (I) and the monomer (II), and the like. In order to remove these, the fluoropolymer or the aqueous solution obtained by polymerizing the monomer (I) and the monomer (II) may be post-treated.

For example, in the production method, a composition containing the aqueous medium and the fluoropolymer may be recovered after the polymerization of the monomer (I) and the monomer (II) is complete, and the resulting composition may be treated by at least one means selected from the group consisting of ultrafiltration, microfiltration, dialysis membrane treatment, liquid separation, and reprecipitation.

When the monomer (I) and the monomer (II) are polymerized in the absence of an aqueous medium, a fluoropolymer or a composition containing a fluoropolymer and the like is obtained after the polymerization is complete, and it is thus possible that the fluoropolymer or the composition is mixed with an aqueous medium, and the resulting composition containing the aqueous medium and the fluoropolymer is treated by at least one means selected from the group consisting of ultrafiltration, microfiltration, dialysis membrane treatment, liquid separation, and reprecipitation.

The composition obtained by polymerizing the monomer (I) and the monomer (II) usually contains a dimer and a trimer of the monomer (I) in a total amount of more than 1.0% by mass based on the mass of the fluoropolymer. The content of the dimer and the trimer of the monomer (I) in the fluoropolymer may be, for example, 2.0% by mass or more, may be 3.0% by mass or more, may be 30.0% by mass or less, and may be 20.0% by mass or less based on the fluoropolymer. The content of the dimer and the trimer in the composition can be determined by performing a gel permeation chromatography (GPC) analysis on the composition and calculating the total proportion of the peak areas (area percentages) of the dimer and the trimer to the total area of all peaks of the chromatogram obtained by the GPC analysis.

The composition obtained by polymerizing the monomer (I) and the monomer (II) usually contains a dimer and a trimer composed of the monomer (I) and the monomer (II) in a total amount of more than 1.0% by mass based on the mass of the fluoropolymer. The content of the dimer and the trimer composed of the monomer (I) and the monomer (II) in the fluoropolymer, for example, may be 2.0% by mass or more, may be 3.0% by mass or more, may be 30.0% by mass or less, and may be 20.0% by mass or less based on the fluoropolymer. The content of the dimer and the trimer in the composition can be determined by performing a gel permeation chromatography (GPC) analysis on the composition and calculating the total proportion of the peak areas (area percentages) of the dimer and the trimer to the total area of all peaks of the chromatogram obtained by the GPC analysis.

Next, preferably the resulting composition containing the aqueous medium and the fluoropolymer is recovered, and the resulting composition is treated by at least one means selected from the group consisting of ultrafiltration, microfiltration, dialysis membrane treatment, liquid separation, and reprecipitation. By this treatment, the dimer and the trimer of the monomer (I) contained in the composition obtained by the polymerization of the monomer (I) and the monomer (II), or the dimer and the trimer composed of the monomer (I) and the monomer (II), can be removed from the composition. The means of treatment is more preferably at least one means selected from the group consisting of ultrafiltration, microfiltration, liquid separation, and reprecipitation, even more preferably at least one means selected from the group consisting of ultrafiltration and liquid separation, and particularly preferably ultrafiltration.

The polymerization of the monomer (I) and the monomer (II) produces the dimer and the trimer of the monomer (I) or the dimer and the trimer composed of the monomer (I) and the monomer (II) and, as a result, the dimer and the trimer of the monomer (I) or the dimer and the trimer composed of the monomer (I) and the monomer (II) are contained in the fluoropolimer.

When removing the dimer and the trimer, usually the unreacted monomer (I) is also removed from the composition at the same time. Also, a fraction having a molecular weight of 3,000 or less, a fraction having a molecular weight of 2,000 or less, a fraction having a molecular weight of 1,500 or less, and a fraction having a molecular weight of 1,000 or less can be removed by suitably selecting the means of post-treatment.

The composition obtained by the polymerization of the monomer (I) and the monomer (II) may be a composition as polymerized that is obtained from the polymerization, may be what is obtained by diluting or concentrating a composition as polymerized that is obtained from the polymerization, or may be what is obtained by dispersion stabilization treatment or the like. In order to facilitate ultrafiltration, microfiltration, or dialysis membrane treatment, it is also preferable to regulate the viscosity of the composition by these treatments.

The content of the fluoropolymer in the composition is not limited, and may be, for example, 0.1 to 40.0% by mass. The content of the fluoropolymer in the composition, from the viewpoint of the removal efficiency of the dimer and the trimer, is preferably 30.0% by mass or less, more preferably 25.0% by mass or less, even more preferably 20.0% by mass or less, particularly preferably 10.0% by mass or less, and is preferably 0.5% by mass or more, more preferably 1.0% by mass or more, even more preferably 1.2% by mass or more, and particularly preferably 1.5% by mass or more. The content of the fluoropolymer in the composition can be regulated by, for example, a method involving adding water to the composition obtained by polymerizing the monomer (I) and the monomer (II), or a method involving concentrating the composition obtained by polymerizing the monomer (I) and the monomer (II).

The pH of the composition is preferably -7.0 to 11.0, more preferably -6.0 to 8.0, and even more preferably -5.0 to 7.0. The pH of the composition can be regulated by adding a pH adjuster to the composition obtained by polymerizing the monomer (I) and the monomer (II). The pH adjuster may be an acid or an alkali, such as a phosphoric acid salt, sodium hydroxide, potassium hydroxide, or aqueous ammonia.

The viscosity of the composition is preferably 25 mPa·s or less because ultrafiltration, microfiltration, or dialysis membrane treatment is facilitated. The viscosity of the composition can be regulated by, for example, a method involving regulating the weight average molecular weight and the number average molecular weight of the fluoropolymer, a method involving regulating the concentration of the fluoropolymer in the composition, or a method involving regulating the temperature of the composition.

Ultrafiltration or microfiltration is not limited no matter whether it is cross-flow filtration or dead-end filtration, and cross-flow filtration is preferable from the viewpoint of reducing the clogging of a membrane.

Ultrafiltration can be performed using an ultrafiltration membrane. Ultrafiltration can be performed using, for example, an ultrafiltration apparatus having an ultrafiltration membrane; and a centrifugal ultrafiltration method, a batch-type ultrafiltration method, a circulationtype ultrafiltration method, and the like can be employed.

The molecular weight cut-off of the ultrafiltration membrane is usually about 0.1 × 10⁴ to 30 × 10⁴ Da. The molecular weight cut-off of the ultrafiltration membrane is preferably 0.3 × 10⁴ Da or more because the clogging of the membrane can be suppressed and the dimer and the trimer can be efficiently reduced. The molecular weight cutoff is more preferably 0.5 × 10⁴ Da or more, particularly preferably 0.8 × 10⁴ Da or more, and most preferably 1.0 × 10⁴ Da or more. The molecular weight cut-off may be 1.0 × 10⁴ Da or more. From the viewpoint of the removal efficiency of the dimer and the trimer, the molecular weight cut-off is preferably 20 × 10⁴ Da or less, and more preferably 10 × 10⁴ Da or less.

The molecular weight cut-off of the ultrafiltration membrane can be, for example, a molecular weight at which 90% of polystyrene having a known weight average molecular weight that is attempted to pass through the membrane is blocked. Polystyrene can be quantified by gel permeation chromatography.

The ultrafiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type ultrafiltration membrane is not limited, and may be, for example, 0.1 to 2 mm, and is preferably 0.8 to 1.4 mm.

The length of the hollow fiber type ultrafiltration membrane is not limited, and may be, for example, 0.05 to 3 m, and is preferably 0.05 to 2 m.

The material of the ultrafiltration membrane is not limited, and examples include organic materials such as cellulose, cellulose ester, polysulfone, sulfonated polysulfone, polyethersulfone, sulfonated polyether sulfone, chlorinated polyethylene, polypropylene, polyolefin, polyvinyl alcohol, polymethylmethacrylate, polyacrylonitrile, polyvinylidene fluoride, and polytetrafluoroethylene, metals such as stainless steel, and inorganic materials such as ceramics.

The material of the ultrafiltration membrane is preferably an organic material, more preferably chlorinated polyethylene, polypropylene, polyvinylidene fluoride, polytetrafluoroethylene, polyacrylonitrile, polysulfone, or polyethersulfone, and even more preferably polyacrylonitrile, polysulfone, or polyvinylidene fluoride.

Specific examples of the ultrafiltration membrane include G-5 type, G-10 type, G-20 type, G-50 type, PW type, and HWS UF type of DESAL; HFM-180, HFM-183, HFM-251, HFM-300, HFM-116, HFM-183, HFM-300, HFK-131, HFK-328, MPT-U20, MPS-U20P, and MPS-U20S of KOCH; SPE1, SPE3, SPE5, SPE10, SPE30, SPV5, SPV50, and SOW30 of Synder; Microza(R) UF series manufactured by Asahi Kasei Corporation; and NTR 7410 manufactured by Nitto Denko Corporation.

From the viewpoint of the removal efficiency of the dimer and the trimer, the ultrafiltration is preferably performed at a pressure of 0.01 MPa or more. More preferably, the pressure is 0.03 MPa or more, and even more preferably 0.05 MPa or more. From the viewpoint of pressure resistance, the pressure is preferably 0.5 MPa or less, more preferably 0.25 MPa or less, and even more preferably 0.2 MPa or less.

From the viewpoint of the removal efficiency of the dimer and the trimer, the ultrafiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

Microfiltration can be performed using a microfiltration membrane. The microfiltration membrane usually has an average pore size of 0.05 to 1.0 µm.

The microfiltration membrane preferably has an average pore size of 0.1 µm or more because the dimer and the trimer can be efficiently removed. The average pore size is more preferably 0.075 µm or more, and even more preferably 0.1 µm or more. Further, the average pore size is preferably 1.00 µm or less. The average pore size is more preferably 0.50 µm or less, and even more preferably 0.25 µm or less.

The average pore size of the microfiltration membrane can be measured in accordance with ASTM F 316-03 (a bubble point method).

The microfiltration membrane is not limited and may be in a conventionally known form, and examples include a hollow fiber type, a flat membrane type, a spiral type, and a tubular type. From the viewpoint of suppressing clogging, a hollow fiber type is preferable.

The inner diameter of the hollow fiber type microfiltration membrane is not limited, and may be, for example, 0.1 to 2 mm, and is preferably 0.8 to 1.4 mm.

The length of the hollow fiber type microfiltration membrane is not limited, and may be, for example, 0.05 to 3 m, and is preferably 0.05 to 2 m.

Examples of the material of the microfiltration membrane include cellulose, aromatic polyamide, polyvinyl alcohol, polysulfone, polyether sulfone, polyvinylidene fluoride, polyethylene, polyacrylonitrile, polypropylene, polycarbonate, polytetrafluoroethylene, ceramics, and metal. Among these, aromatic polyamide, polyvinyl alcohol, polysulfone, polyvinylidene fluoride, polyethylene, polyacrylonitrile, polypropylene, polycarbonate, or polytetrafluoroethylene is preferable, and polyacrylonitrile or polyvinylidene fluoride is particularly preferable.

Specific examples of the microfiltration membrane include Cefilt manufactured by NGK Insulators, Ltd.; Microza U Series and Microza P Series manufactured by Asahi Kasei Corporation; Poreflon SPMW, Poreflon OPMW, and Poreflon PM manufactured by Sumitomo Electric Industries, Ltd.; Trayfil manufactured by Toray Industries, Inc.; NADIR MP005 and NADIR MV020 manufactured by Microdyn-Nadir; and X-Flow manufactured by Norit.

From the viewpoint of the removal efficiency of the dimer and the trimer, microfiltration is preferably performed at a pressure of 0.01 MPa or more. The pressure is more preferably 0.03 MPa or more, and even more preferably 0.05 MPa or more. From the viewpoint of pressure resistance, the pressure is preferably 0.5 MPa or less, more preferably 0.25 MPa or less, and even more preferably 0.2 MPa or less.

From the viewpoint of the removal efficiency of the dimer and the trimer, microfiltration is preferably performed at a flow rate of 10 mL/min or more and more preferably performed at a flow rate of 50 mL/min or more, and is preferably performed at a flow rate of 5,000 mL/min or less and more preferably performed at a flow rate of 1,000 mL/min or less.

The dialysis membrane treatment is performed using a dialysis membrane. The dialysis membrane usually has a molecular weight cut-off of 0.05 × 10⁴ to 100 × 10⁴ Da.

The molecular weight cut-off of the dialysis membrane is preferably 0.3 × 10⁴ Da or more because the clogging of the membrane can be suppressed and the dimer and the trimer can be efficiently removed. The molecular weight cut-off is more preferably 0.5 × 10⁴ Da or more, even more preferably 0.8 × 10⁴ Da or more, and yet more preferably 1.0 × 10⁴ Da or more. The molecular weight cut-off may be 1.0 × 10⁴ Da or more.

From the viewpoint of the removal efficiency of the dimer and the trimer, the molecular weight cut-off is preferably 20 × 10⁴ Da or less, and more preferably 10 × 10⁴ Da or less.

The molecular weight cut-off of the dialysis membrane can be measured by, for example, the same method as ultrafiltration membrane.

The material of the dialysis membrane is not limited, and examples include cellulose, polyacrylonitrile, polymethylmethacrylate, ethylene vinyl alcohol copolymers, polysulfone, polyamide, and polyester polymer alloy.

Specific examples of the dialysis membrane include Spectra/Por(R) Float-A-Lyzer, Tube-A-Lyzer, Dialysis tubing, 6 Dialysis tubing, and 7 Dialysis tubing manufactured by Spectrum Laboratories Inc.

Ultrafiltration, microfiltration, or dialysis membrane treatment is preferably performed at a temperature of 10°C or higher. The temperature is more preferably 15°C or higher, even more preferably 20°C or higher, and particularly preferably 30°C or higher. By adjusting the temperature within the above range, the dimer and the trimer can be more efficiently reduced. The temperature is preferably 90°C or lower, more preferably 80°C or lower, even more preferably 70°C or lower, and particularly preferably 60°C or lower.

Ultrafiltration, microfiltration, or dialysis membrane treatment can be performed while adding water to the composition or while regulating the pH of the composition. Water may be intermittently added to the composition or continuously added to the composition.

The end point of ultrafiltration, microfiltration, or dialysis membrane treatment is suitably determined, and is not limited. In ultrafiltration, microfiltration, or dialysis membrane treatment, in order to improve the durability of the filtration membrane, the membrane may be backwashed once per a filtration time of 1 to 24 hours as a rough guide.

Liquid separation can be performed by, for example, adding an organic solvent to the composition to separate the composition into two phases, i.e., an aqueous phase and an organic solvent phase, and recovering the aqueous phase.

Reprecipitation can be performed by, for example, adding a poor solvent to the composition dropwise to precipitate the fluoropolymer, recovering the precipitated fluoropolymer, dissolving the recovered fluoropolymer in a good solvent, adding the resulting solution to a poor solvent dropwise to precipitate the fluoropolymer again, and recovering the precipitated fluoropolymer.

By post-treating the composition containing the fluoropolymer by the means described above, a fluoropolymer-containing aqueous solution that is substantially free of the dimer and the trimer, or a fluoropolymer-containing aqueous solution with a reduced content of a fraction having a molecular weight of 3,000 or less, is usually obtained. The fluoropolymer-containing aqueous solution obtained by treating the composition may be used as-is in various applications, and the fluoropolymer separated from the aqueous solution may be used in various applications. The method for separating the fluoropolymer from the aqueous solution is not limited. For example, the fluoropolymer can be separated by a method such as coagulation, washing, or drying of the fluoropolymer in the aqueous solution.

The production method described above provides a fluoropolymer or an aqueous solution containing a fluoropolymer and an aqueous medium.

While embodiments have been described above, it will be understood that various changes in form and detail can be made without departing from the gist and scope of the claims.

### EXAMPLES

Next, embodiments of the present disclosure will now be described with reference to Examples, but the present disclosure is not limited only to these Examples.

The numerical values of the Examples were measured by the following methods.

### (Concentration of fluoropolymer in aqueous solution (solid concentration))

In a vacuum dryer, about 1 g of an aqueous solution containing a fluoropolymer was dried at 60°C for 60 minutes, the mass of non-volatile matter was measured, and the ratio of the mass of the non-volatile matter to the mass (1 g) of the aqueous solution was expressed in percentage and regarded as the fluoropolymer concentration.

### (Composition of fluoropolymer)

The composition of the fluoropolymer was measured by ¹⁹F-NMR measurement.

### (Method for measuring weight average molecular weight (Mw), number average molecular weight (Mn), and content of fraction having molecular weight of 3,000 or less)

The Mw and Mn of the fluoropolymer were measured by gel permeation chromatography (GPC) equipped with a differential refractometer (RI-501 manufactured by SHOWA DENKO K.K.) using columns manufactured by Tosoh Corporation (one TSK gel α-M and one TSG gel α-3000) connected in series, while allowing 0.05 M lithium bromide-containing dimethylformamide to flow at a flow rate of 0.8 ml/min as a solvent, and the molecular weights were calculated using monodisperse polystyrene as a standard.

### (Method for measuring content of dimer and trimer in fluoropolymer)

### (1) Extraction from aqueous solution

The solid content of an aqueous solution of a fluoropolymer was measured, and the amount of the aqueous solution corresponding to 0.2 g of the solid content of the fluoropolymer was weighed. Thereafter, water and methanol were added such that the volume ratio of water, including water contained in the aqueous solution, to methanol was 50/50 (% by volume) to obtain a mixed solution containing the fluoropolymer, water, and methanol. Thereafter, the resulting mixed solution was filtered using an ultrafiltration disc (a molecular weight cut off of 3,000 Da), and a recovered solution containing the fluoropolymer was recovered.

The recovered solution was analyzed using a liquid chromatograph-mass spectrometer (Waters, LC-MS ACQUITY UPLC/TQD) to obtain a chromatogram of the recovered solution.

The content of a dimer and a trimer in the recovered solution was obtained by converting the integral values of peaks derived from the dimer and the trimer appearing in the chromatogram of the recovered solution into the content of the dimer and the trimer of the monomer using the calibration curve of an analogous monomer.

### (2) Calibration curve of monomer

Five concentration levels of a methanol standard solution of a monomer having a known content of 1 ng/mL to 100 ng/mL were prepared, and measurement was made using a liquid chromatograph-mass spectrometer (Waters, LC-MS ACQUITY UPLC/TQD). The relationship between the content of each monomer and the integrated value of a peak corresponding to the content was plotted to create a calibration curve (first-order approximation) of each monomer. Next, the calibration curve (first-order approximation) of each monomer was used to create calibration curves of the dimer and the trimer of each monomer.

### Measuring instrument configuration and LC-MS measurement conditions

### [Table 1]

**Table 1**

| LC unit | | | | |
|---|---|---|---|---|
| | Equipment | Acquity UPLC manufactured by Waters | | |
| | Column | Acquity UPLC BEH C18 1.7 µm (2.1 × 50 mm) manufactured by Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS unit | | | | |
|---|---|---|---|---|
| | Equipment | TQ Detecter | | |
| | Measurement mode | MRM (Multiple Reaction Monitoring) | | |
| | Ionization method | Electrospray ionization | | |
| | | SCAN | | |

The quantification limit in this measuring instrument configuration is 1 ng/mL.

### Example 1

A reactor was charged with 6.32 g of CF₂=CFOCF₂CF₂SO₃Na, 34 g of water, and ammonium persulfate (APS) in an amount corresponding to 1.5 mol% based on the amount of CF₂=CFOCF₂CF₂SO₃Na, then 3.58 g of 1,2-difluoroethylene was introduced, and the mixture was stirred at 60°C for 7.5 hours, with the reactor being hermetically sealed. The pressure inside the reactor decreased from 0.30 MPa to 0.23 MPa as the reaction progressed.

The resulting fluoropolymer-containing aqueous solution was added to a dialysis membrane (a molecular weight cutoff of 3,500 Da, made of cellulose), and dialyzed at room temperature by being brought into contact with water, and thus an aqueous fluoropolymer solution was obtained. The concentration of the fluoropolymer in the aqueous solution obtained by performing dialysis membrane purification was 1.4% by mass.

When the aqueous solution obtained by performing dialysis was analyzed by NMR to examine the polymer composition, the molar ratio of the polymerization unit derived from CF₂=CFOCF₂CF₂SO₃Na to the polymerization unit derived from 1,2-difluoroethylene contained in the fluoropolymer was 1.0/1.1.

The resulting fluoropolymer had a weight average molecular weight (Mw) of 9.7 × 10⁴ and a number average molecular weight (Mn) of 5.0 × 10⁴. The content of the dimer and the trimer of CF₂=CFOCF₂CF₂SO₃Na in the aqueous solution obtained by performing dialysis was 0.1% by mass or less based on the fluoropolymer. The content of the dimer and the trimer composed of CF₂=CFOCF₂CF₂SO₃Na and CHF=CHF was 0.1% by mass or less based on the fluoropolymer. The content of the fraction having a molecular weight of 3,000 or less in the aqueous solution obtained by performing dialysis was 0.1% by mass or less.

TG -DTA analysis of a dried product of the resulting fluoropolymer resulted in a decomposition initiation temperature of 355°C.

The resulting fluoropolymer was used to prepare a plurality of aqueous solutions having different fluoropolymer contents. When measuring the particle size of each aqueous solution by dynamic light scattering (DLS), it was not possible to measure the particle size when the fluoropolymer content was 8.2% by mass or less based on the aqueous solution. Accordingly, the fluoropolymer obtained in Example 1 has high water solubility.

Figure 1 shows the results of TG-DTA analysis of the resulting fluoropolymer together with the results of TG-DTA analysis of the homopolymer of CF₂=CFOCF₂CF₂SO₃Na (a weight average molecular weight (Mw) of 0.9 × 10⁴). From the results shown in Figure 1, it can be understood that the fluoropolymer obtained in Example 1 is more readily decomposed at a temperature equal to or higher than the decomposition initiation temperature than the homopolymer of CF₂=CFOCF₂CF₂SO₃Na.

### Example 2

A reactor was charged with 1.28 g of CH₂=CFCF₂OCF(CF₃)COOH, 7.9 g of acetonitrile, and Perbutyl PV (registered trade name, manufactured by NOF Corporation) in an amount equivalent to 1 mol% based on the amount of CH₂=CFCF₂OCF(CF₃)COOH, then 1.72 g of 1,2-difluoroethylene was added, and the mixture was stirred at 55°C for 19 hours, with the reactor being hermetically sealed. The pressure inside the reactor decreased from 0.22 MPa to 0.11 MPa as the reaction progressed.

A suitable amount of an aqueous KOH solution was added to the resulting fluoropolymer-containing aqueous solution. Then, after acetonitrile was distilled off, the fluoropolymer-containing aqueous solution treated with a base was added to a dialysis membrane (a molecular weight cutoff of 3,500 Da, made of cellulose), and dialyzed at room temperature by being brought into contact with water, and thus an aqueous fluoropolymer solution was obtained. The concentration of the fluoropolymer in the aqueous solution obtained by performing dialysis membrane purification was 1.9% by mass.

When the aqueous solution obtained by performing dialysis was analyzed by NMR to examine the composition of the polymer, the molar ratio of the polymerization unit derived from CH₂=CFCF₂OCF(CF₃)COOH to the polymerization unit derived from 1,2-difluoroethylene contained in the fluoropolymer was 1.0/1.0.

The resulting fluoropolymer had a weight average molecular weight (Mw) of 2.1 × 10⁵ and a number average molecular weight (Mn) of 1.2 × 10⁵. The content of the dimer and the trimer of CH₂=CFCF₂OCF(CF₃)COOH in the aqueous solution obtained by performing dialysis was 0.1% by mass or less based on the fluoropolymer. The content of the dimer and the trimer composed of CH₂=CFCF₂OCF(CF₃)COOH and CHF=CHF was 0.1% by mass or less based on the fluoropolymer. The content of the fraction having a molecular weight of 3,000 or less in the aqueous solution obtained by performing dialysis was 0.1% by mass or less.

### Example 3

A reactor was charged with 1.28 g of CH₂=CFCF₂OCF(CF₃)COOH, 7.9 g of acetonitrile, and Perbutyl PV (registered trade name, manufactured by NOF Corporation) in an amount equivalent to 1 mol% based on the amount of CH₂=CFCF₂OCF(CF₃)COOH, then 4.13 g of 1,2-difluoroethylene was added, and the mixture was stirred at 55°C for 20 hours, with the reactor being hermetically sealed. The pressure inside the reactor decreased from 0.31 MPa to 0.15 MPa as the reaction progressed.

A suitable amount of an aqueous KOH solution was added to the resulting fluoropolymer-containing aqueous solution. Then, after acetonitrile was distilled off, the fluoropolymer-containing aqueous solution treated with a base was added to a dialysis membrane (a molecular weight cutoff of 3,500 Da, made of cellulose), and dialyzed at room temperature by being brought into contact with water, and thus an aqueous fluoropolymer solution was obtained. The concentration of the fluoropolymer in the aqueous solution obtained by performing dialysis membrane purification was 2.3% by mass.

When the aqueous solution obtained by performing dialysis was analyzed by NMR to examine the composition of the polymer, the molar ratio of the polymerization unit derived from CH₂=CFCF₂OCF(CF₃)COOH to the polymerization unit derived from 1,2-difluoroethylene contained in the fluoropolymer was 3.0/1.0.

The resulting fluoropolymer had a weight average molecular weight (Mw) of 1.2 × 10⁵ and a number average molecular weight (Mn) of 3.0 × 10⁴. The content of the dimer and the trimer of CH₂=CFCF₂OCF(CF₃)COOH in the aqueous solution obtained by performing dialysis was 0.1% by mass or less based on the fluoropolymer. The content of the dimer and the trimer composed of CH₂=CFCF₂OCF(CF₃)COOH and CHF=CHF was 0.1% by mass or less based on the fluoropolymer. The content of the fraction having a molecular weight of 3,000 or less in the aqueous solution obtained by performing dialysis was 0.1% by mass or less.

### Example 4

A reactor was charged with 1.28 g of CH₂=CFCF₂OCF(CF₃)COOH, 7.9 g of acetonitrile, and Perbutyl PV (registered trade name, manufactured by NOF Corporation) in an amount equivalent to 3 mol% based on the amount of CH₂=CFCF₂OCF(CF₃)COOH, then 1.45 g of 1,2-difluoroethylene was added, and the mixture was stirred at 55°C for 19 hours, with the reactor being hermetically sealed. The pressure inside the reactor decreased from 0.12 MPa to 0.06 MPa as the reaction progressed.

A suitable amount of an aqueous KOH solution was added to the resulting fluoropolymer-containing aqueous solution. Then, after acetonitrile was distilled off, the fluoropolymer-containing aqueous solution treated with a base was added to a dialysis membrane (a molecular weight cutoff of 3,500 Da, made of cellulose), and dialyzed at room temperature by being brought into contact with water, and thus an aqueous fluoropolymer solution was obtained. The concentration of the fluoropolymer in the aqueous solution obtained by performing dialysis membrane purification was 2.2% by mass.

When the aqueous solution obtained by performing dialysis was analyzed by NMR to examine the composition of the polymer, the molar ratio of the polymerization unit derived from CH₂=CFCF₂OCF(CF₃)COOH to the polymerization unit derived from 1,2-difluoroethylene contained in the fluoropolymer was 0.7/1.0.

The resulting fluoropolymer had a weight average molecular weight (Mw) of 1.3 × 10⁵ and a number average molecular weight (Mn) of 8.0 × 10⁴. The content of the dimer and the trimer of CH₂=CFCF₂OCF(CF₃)COOH in the aqueous solution obtained by performing dialysis was 0.1% by mass or less based on the fluoropolymer. The content of the dimer and the trimer composed of CH₂=CFCF₂OCF(CF₃)COOH and CHF=CHF was 0.1% by mass or less based on the fluoropolymer. The content of the fraction having a molecular weight of 3,000 or less in the aqueous solution obtained by performing dialysis was 0.1% by mass or less.

## Claims

1. A fluoropolymer comprising a polymerization unit (I) derived from a monomer (I) represented by the general formula (I) and a polymerization unit (II) derived from a monomer (II) represented by the formula (II):
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more; and
CHF=CHF (II).

2. The fluoropolymer according to claim 1, wherein a content of the polymerization unit (I) is 20 to 99 mol% based on the entirety of polymerization units constituting the fluoropolymer, and a content of the polymerization unit (II) is 80 to 1 mol% based on the entirety of polymerization units constituting the fluoropolymer.

3. The fluoropolymer according to claim 1 or 2, wherein a content of the polymerization unit (I) is 40 to 99 mol% based on the entirety of polymerization units constituting the fluoropolymer, and a content of the polymerization unit (II) is 60 to 1 mol% based on the entirety of polymerization units constituting the fluoropolymer.

4. The fluoropolymer according to any one of claims 1 to 3, wherein a content of a dimer and a trimer of the monomer (I) is 1.0% by mass or less based on the fluoropolymer.

5. The fluoropolymer according to any one of claims 1 to 4, wherein a content of a dimer and a trimer composed of the monomer (I) and the monomer (II) is 1.0% by mass or less based on the fluoropolymer.

6. The fluoropolymer according to any one of claims 1 to 5, wherein A⁰ is -SO₃M or -COOM, wherein M is H, a metal atom, NR⁷₄, imidazolium optionally having a substituent, pyridinium optionally having a substituent, or phosphonium optionally having a substituent, and R⁷ is H or an organic group.

7. The fluoropolymer according to any one of claims 1 to 5, wherein the polymerization unit (I) is at least one selected from the group consisting of a polymerization unit (1) derived from a monomer (1) represented by the general formula (1) and a polymerization unit (2) derived from a monomer (2) represented by the general formula (2):
CX₂=CY(-CZ₂-O-Rf-A) (1)
wherein X is the same or different and is H or F; Y is H, F, an alkyl group, or a fluorine-containing alkyl group; Z is the same or different and is H, F, an alkyl group, or a fluoroalkyl group; Rf is a fluorine-containing alkylene group having 1 to 40 carbon atoms or a fluorine-containing alkylene group having 2 to 100 carbon atoms and having ether bond; and A is -COOM, -SO₃M, -OSO₃M, or -C(CF₃)₂OM, wherein M is H, a metal atom, NR⁷₄, imidazolium optionally having a substituent, pyridinium optionally having a substituent, or phosphonium optionally having a substituent, and R⁷ is H or an organic group; provided that at least one of X, Y, and Z contains fluorine atom; and
CX₂=CY(-O-Rf-A) (2)
wherein X is the same or different and is H or F; Y is H, F, an alkyl group, or a fluorine-containing alkyl group; Rf is a fluorine-containing alkylene group having 1 to 40 carbon atoms or a fluorine-containing alkylene group having 2 to 100 carbon atoms and having ether bond or keto group; and A is as described above.

8. The fluoropolymer according to claim 7, wherein A is -SO₃M or -COOM, wherein M is H, a metal atom, NR⁷₄, imidazolium optionally having a substituent, pyridinium optionally having a substituent, or phosphonium optionally having a substituent, and R⁷ is H or an organic group.

9. The fluoropolymer according to any one of claims 1 to 8, having a weight average molecular weight (Mw) of 1.0 × 10⁴ or more.

10. The fluoropolymer according to any one of claims 1 to 9, having a molecular weight distribution (Mw/Mn) of 3.0 or less.

11. The fluoropolymer according to any one of claims 1 to 10, having an ion exchange capacity of 0.8 meq/g or more.

12. The fluoropolymer according to any one of claims 1 to 11, having an ion exchange rate (IXR) of 43 or less.

13. An aqueous solution comprising the fluoropolymer according to any of claims 1 to 12.

14. An aqueous solution according to claim 13, wherein a content of the fluoropolymer is 1.0% by mass or more based on the aqueous solution.

15. A coating composition comprising the fluoropolymer according to any one of claims 1 to 12 or the aqueous solution according to claim 13 or 14.

16. A method for producing the fluoropolymer according to any one of claims 1 to 12, comprising polymerizing a monomer (I) and a monomer (II) to produce the fluoropolymer.

17. The production method according to claim 16, wherein a temperature of the polymerization is 70°C or lower.

18. The production method according to claim 16 or 17, wherein the polymerization is performed in an aqueous medium.

19. The production method according to any of claims 16 to 18, wherein the polymerization is performed in the presence of a polymerization initiator, and the polymerization initiator is a persulfate.

20. The production method according to any of claims 16 to 19, wherein the polymerization is performed in the presence of a polymerization initiator in an aqueous medium, and a total amount of the polymerization initiator added for use in the polymerization is 0.00001 to 10% by mass based on the aqueous medium.

21. The production method according to any of claims 16 to 20, wherein the polymerization is performed in an aqueous medium, a composition containing the aqueous medium and the fluoropolymer is recovered after the polymerization is complete, and the composition is treated by at least one means selected from the group consisting of ultrafiltration, microfiltration, dialysis membrane treatment, liquid separation, and reprecipitation.
